# EUROPÄISCHE PATENTSCHRIFT

(11) **EP 2 846 985 B1**
(45) Veröffentlichungstag und Bekanntmachung des Hinweises auf die Patenterteilung: **17.02.2016**
(21) Anmeldenummer: 13737200.9
(22) Anmeldetag: 09.07.2013
(51) Int. Cl.: B29C 67/00, B22F 3/105

(54) **VERFAHREN UND VORRICHTUNG ZUM ENTPACKEN EINES BAUTEILS**
METHOD AND DEVICE FOR UNPACKING A COMPONENT
PROCÉDÉ ET DISPOSITIF DE DÉBALLAGE D'UN COMPOSANT

(30) Priorität: 09.07.2012 DE 102012106141
(43) Veröffentlichungstag der Anmeldung: 18.03.2015
(73) Patentinhaber: ExOne GmbH, 86368 Gersthofen (DE)
(72) Erfinder: MÜLLER, Alexander, 86343 Königsbrunn (DE); HÖCHSMANN, Rainer, 86863 Langenneufnach (DE)
(74) Vertreter: Viering, Jentschura & Partner mbB Patent- und Rechtsanwälte
(86) Internationale Anmeldenummer: PCT/EP2013/064501
(87) Internationale Veröffentlichungsnummer: WO 2014/009376

(56) Entgegenhaltungen:
- US-A1- 2002 090 410
- US-A1- 2004 084 814
- US-A1- 2010 044 547

## Beschreibung

Die vorliegende Erfindung betrifft ein Verfahren und eine Vorrichtung zum Entpacken eines mittels eines generativen Fertigungsverfahrens hergestellten Bauteils aus einer das Bauteil umgebenden Partikelmaterial-Schüttung aus losem, nicht-verfestigtem Partikelmaterial.

Es gibt zahlreiche generative Fertigungsverfahren, bei denen das zu fertigende Bauteil schichtweise aus Partikelmaterial/Pulvermaterial aufgebaut wird. Die jeweilige Partikelmaterialschicht wird dabei selektiv in einem vorbestimmten Teilbereich davon verfestigt, so dass das Bauteil aus selektiv verfestigten übereinander liegenden und sich zumindest teilweise überlappenden Teilbereichen aufgebaut werden kann. Als Beispiele seien z.B. das sog. 3D-Drucken oder das selektive Lasersintern genannt. Generative Fertigungsverfahren (oder schichtweise Herstellungsverfahren) umfassen neben dem sog. Rapid Prototyping z.B. auch ein sog. Rapid Tooling oder ein sog. Rapid Manufacturing. Das herzustellende Bauteil kann z.B. eine Gussform oder ein Gießkern sein. Das Partikelmaterial kann z.B. Sand sein. Es sollte jedoch verständlich sein, dass auch anderes Partikelmaterial verwendet werden kann und andere Bauteile mit dem Verfahren herstellbar sind.

Bei der schichtweisen Herstellung von derartigen pulverbasierten Bauteilen werden die herzustellenden Gegenstände während des Bauprozesses in loses Partikelmaterial eingebettet. Gegen Ende des Bauprozesses ist das (zumindest eine) Bauteil somit von einer Partikelmaterial-Schüttung aus losem Partikelmaterial umgeben. Nach dem Herstellungsprozess muss das Bauteil aus der Partikelmaterial-Schüttung entnommen bzw. von dem losen, nicht-verfestigten Partikelmaterial abgetrennt werden; dies wird als sog. "Entpacken" des Bauteils bezeichnet. An das sog. Entpacken des Bauteils kann sich eine (Fein-)Reinigung desselben anschließen, um anhaftende Partikelmaterial-Reste zu entfernen. Nicht-verfestigtes Partikelmaterial (oder "ungebundenes" Partikelmaterial) bezeichnet dabei Partikelmaterial außerhalb des verfestigten Teilbereichs einer jeweiligen Schicht, d.h. z.B. Partikelmaterial außerhalb des Druck- oder Sinterbereichs einer jeweiligen Schicht bzw. nicht-bedrucktes oder nichtgesintertes Partikelmaterial.

Das Entpacken kann z.B. durch Absaugen von dem losen Partikelmaterial mit einem leistungsstarken Sauger erfolgen. Dazu wird z.B. nach der Fertigstellung des Bauteils bzw. nach Beendigung des Bauprozesses ein erster Gegenstand mit einer geeigneten Absaugvorrichtung (z.B. einer sog. Sauglanze oder einem Saugschlauch) von oben soweit freigelegt, bis er z.B. per Hand aus der Baubox entnommen werden kann. Danach wird der nächste Gegenstand freigesaugt, entnommen usw. Ein Bediener muss in diesem Fall alle Bauteile sequentiell freilegen und entnehmen. Ggf. können auch mehrere Bauteile in einer Ebene gleichzeitig freigesaugt werden und dann entnommen werden.

Nachteilig ist dabei die zeitaufwändige Absaugung des losen Partikelmaterials mittels der Saugvorrichtung. Dies gilt vor allem für den Fall eines großen Bauraums bzw. einer großen Baubox, in dem/der ein großes Volumen von nicht-verfestigtem Partikelmaterial aufgenommen ist. Insbesondere bei der manuellen Absaugung besteht darüber hinaus die Gefahr, dass Gegenstände durch Berührung mit der Absaugvorrichtung beschädigt werden können. Eine Automatisierung des Saugvorgangs, z.B. in der Form, dass die Absaugung des Partikelmaterials mittels Roboterarm erfolgt, ist nur mit hohem Aufwand möglich, da für neue Gegenstände neue aufwändige Ablaufprogrammierungen im Roboter notwendig sind. Ein weiterer Nachteil der Absaugmethode besteht darin, dass das Partikelmaterial nach dem Absaugen nur mit viel Aufwand in einem Behälter gesammelt werden kann. Dies erfolgt üblicherweise in einem Separator bzw. einer geeigneten Trennvorrichtung, welche das Partikelmaterial von dem Saugstrom/Luftstrom abtrennt. Ein weiterer Nachteil besteht darin, dass sämtliche Komponenten, die mit dem abzusaugendem Partikelmaterial in Berührung kommen (z.B. Absauglanze, Saugschlauch, Separator, etc.), einem starken Verschleiß unterliegen, insbesondere bei stark abrasivem Partikelmaterial wie z.B. Sand.

Das Bauteil kann z.B. auf einer sog. Bauplattform aufgebaut werden, so dass die Partikelmaterial-Schüttung und das darin aufgenommene Bauteil am Ende des Bauprozesses auf der Bauplattform angeordnet sind. Die Bauplattform kann wiederum in einer sog. Baubox aufgenommen sein. Für leicht rieselfähiges Partikelmaterial bzw. eine gut rieselfähige Partikelmaterial-Schüttung und in dem Fall einer vergleichsweise kleinen Baubox kann es dabei unter Umständen ausreichend sein, zum Entsanden oder Entpacken des Bauteils aus der Partikelmaterial-Schüttung in der Bauplattform ausgebildete, selektiv verschließbare Durchgangs-Öffnungen zu öffnen, so dass das lose Partikelmaterial nach unten aus dem Bauraum heraus fällt/rieselt. In bestimmten Fällen kann das Partikelmaterial so ausreichend ohne ein weiteres Auflockern (z.B. mittels Vibration) abfließen/ausrieseln. Allerdings fließt das lose Partikelmaterial in vielen Fällen lediglich in einem Bereich unmittelbar oberhalb der jeweiligen Öffnung ab, so dass es zur Ausbildung von Hohlräumen oberhalb der jeweiligen Öffnung kommt, in welchem Fall kein weiteres Partikelmaterial mehr abfließt (sog. "Brückenbildung" über der jeweiligen Öffnung). In diesen Fällen muss das Partikelmaterial aufgelockert werden, z.B. mittels Vibration, ohne dadurch das Bauteil zu beschädigen. Dies kann insbesondere in dem Fall einer großen Baubox schwierig/problematisch sein. Ferner kann mit diesem Verfahren nur ein gewisser Anteil des losen Partikelmaterials ausgetragen werden, und eine große Restmenge an Partikelmaterial kann in der Baubox verbleiben.

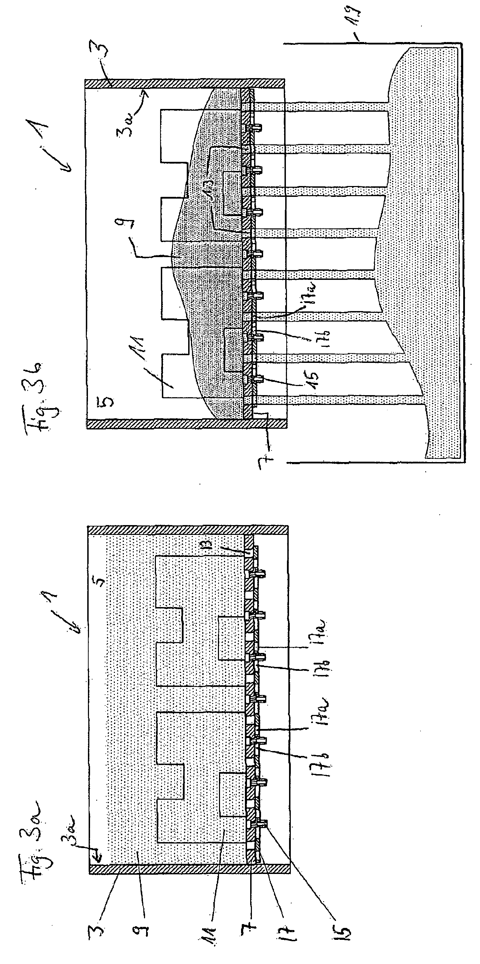

Z.B. offenbart WO 2007/139938 A2 (siehe dort z.B. die Figuren 3A - 3C) die Verwendung zweier mit vertikalem Abstand zueinander angeordneter Lochplatten, deren Löcher in horizontaler Richtung versetzt zueinander angeordnet sind. Nach dem Aufbauen des Objekts wird an der Unterseite der unteren Lochplatte ein Vakuum angelegt und das Partikelmaterial so nach unten hin abgesaugt. Die beiden Lochplatten können in vertikaler Richtung oder horizontaler Richtung relativ zueinander bewegbar ausgebildet sein. Mit anderen Worten wird von der oberen Lochplatte eine Bauplattform, mit Auslass-Öffnungen gebildet, wobei die Auslass-Öffnungen durch die versetzt angeordnete untere Lochplatte verschlossen sind (während des Bauprozesses). Nachteilig bei dieser Ausführungsform ist z.B., dass Partikelmaterial, das zur Brückenbildung neigt (siehe oben), so nicht zuverlässig abgelassen werden kann. Durch das Absaugen von unten können sich Hohlräume über den Absaugöffnungen bilden, und das Material oberhalb der Hohlräume fließt nicht mehr ab. Die Brückenbildung kann unter Umständen durch starke Vibrationen, z.B. an der seitlichen Bauboxwandung oder der Bauplattform, verhindert oder gelöst werden. Die Vibrationen können jedoch nachteilig sein für die Bauteile, wobei es leicht zu Bauteilbeschädigungen kommen kann.

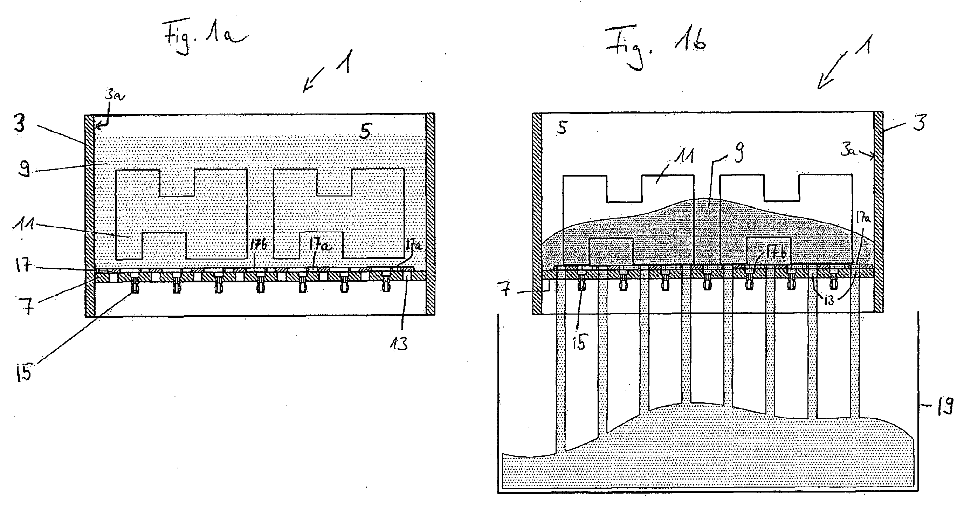

Auch US 2008/0241404 A1 offenbart eine Bauplattform, die ausgebildet ist, um nicht verfestigtes Partikelmaterial durch die Bauplattform hindurch nach unten hin aus der Baukammer heraus abzulassen. Siehe dort z.B. die Figur 1. Gemäß US 2008/0241404 A1 weist die Bauplattform ein Sieb- oder Gitterelement auf, dessen Öffnungen während des Bauprozesses von unteren Klappen verschlossen werden/sind. Durch Öffnen der Klappen nach dem Bauprozess kann nicht verfestigtes Partikelmaterial aus der Baukammer abgelassen werden, soweit dieses ausreichend rieselfähig ist.

Es sind zahlreiche weitere Entpackungs-Verfahren bekannt:

Z.B. offenbart US 2001/0045678 A1 (siehe dort z.B. die Figuren 5A-7C) die Bauplattform mit einem Gitter- oder Siebelement zu versehen. Am Ende des Bauprozesses wird das Gitterelement mit der darauf angeordneten Pulverschüttung, in welcher das Bauteil eingebettet ist, seitlich aus dem Bauraum heraus in eine separate Nachbehandlungskammer verschoben, wo das Bauteil entpackt wird. Hierzu wird das Gitterelement in der Nachbehandlungskammer auf Rollen angeordnet, welche das Gitterelement hin und her bewegen, um Vibrationen zu erzeugen und so nicht-verfestigtes Partikelmaterial abzuschütteln. Ferner ist ein Gebläse in der Nachbehandlungskammer vorgesehen, um das Bauteil von oben anzublasen. Hierbei werden zwei separate Kammern verwendet, eine Baukammer und eine Nachbehandlungskammer, wobei die Partikelmaterial-Schüttung vor dem eigentlichen Entpacken von der einen in die andere Kammer bewegt werden muss.

US 2002/0090410 A1 offenbart ein Entpackungs-Verfahren, bei dem durch die seitliche Bauraumwand bzw. die vertikale Umfangswandung des Bauraums (oder der Baubox) hindurch einerseits seitlich Luft eingeblasen (auf einer ersten Seite) und andererseits Baumaterial seitlich abgesaugt wird (auf einer der ersten Seite gegenüberliegenden zweiten Seite). Gemäß US 2002/0090410 A wird nicht-verfestigtes Partikelmaterial also seitlich abgesaugt, kombiniert mit einem seitlichen Anblasen des nicht-verfestigten Partikelmaterials. Hierzu muss die Seitenwand und somit die gesamte Baubox entsprechend hoch dimensioniert werden, da die seitlichen Öffnungen zum Einblasen/Absaugen während des Bauprozesses unterhalb der Bauplattform bzw. des Gitterelements positioniert sein sollten. Zudem wird das Bauteil auf einem Gitterelement aufgebaut, und Partikelmaterial kann beim Entpacken des Bauteils durch Löcher des Gitterelements nach unten fallen, nachdem die Öffnungen des Gitterelements durch ein nach unten Fahren von einer höhenverstellbaren Bühne freigegeben sind/wurden. Eine unterstützende Vibration ist ebenfalls vorgeschlagen, um die Fließfähigkeit des Partikelmaterials zu erhöhen.

Ein weiteres Entpackungs-Verfahren ist aus der WO 2005/025780 bekannt. Dieses Dokument schlägt vor, die Bauplattform nach der Herstellung des Bauteils in eine Absaugposition zu verfahren und das Bauteil anschließend mittels eines seitlichen Saugstroms zu entpacken, wodurch ein Entfernen des nicht-verfestigten Aufbaumaterials und eine Kühlung des Formkörpers und des Trägers bzw. der Bauplattform erfolgen sollen. Auch hier muss die Seitenwand und somit die gesamte Baubox entsprechend hoch dimensioniert werden.

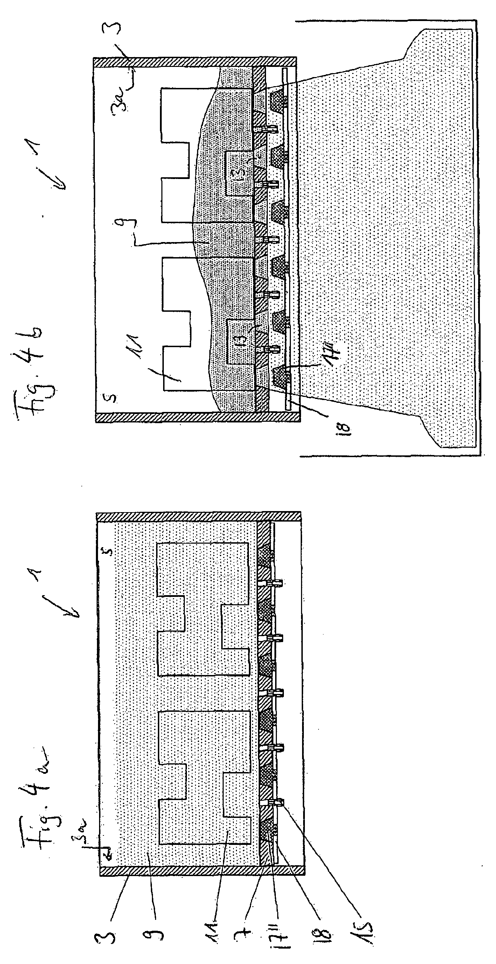

WO 01/10631 A2 offenbart eine Bauplattform, die porös ausgebildet oder mit Öffnungen versehen ist, wobei durch die Poren bzw. die Öffnungen von unten ein Gas eingeblasen wird, welches eine Art Wirbelbett erzeugt und das das hergestellte Objekt umgebende Pulver auflockert. Das lose Partikelmaterial wird nach oben hin aus dem Bauraum entfernt, z.B. durch ein nach oben Fahren der Bauplattform in Verbindung mit einem Kippen des Bauraums. Siehe z.B. Figuren 3 und 4 der WO 01/10631 A2. Die Entnahme des Baumaterials durch die obere Öffnung des Bauraums ist aufwendig und kompliziert, insb. bei einem groß dimensionierten Bauraum, und zudem kann ein Kippen des Bauraums bei Vorliegen eines Wirbelbetts dazu führen, dass die Bauteile in der Wirbelschicht wandern und z.B. gegeneinander oder gegen eine Umfangswand des Bauraums prallen/stoßen, was eine Beschädigung der Bauteile bewirken kann.

US 2004/0084814 A1 offenbart ein Verfahren zum Entpacken eines Bauteils, bei dem von unten Luft in den Bauraum eingeblasen und Baumaterial seitlich durch eine seitliche Bauraumwand hindurch abgesaugt wird.

US 2010/0044547 offenbart einen Bautisch, in dem Gaskanäle ausgebildet sind.

Es ist eine Aufgabe der vorliegenden Erfindung, ein Verfahren und eine Vorrichtung zur Verfügung zu stellen, welche ein einfaches aber dennoch zuverlässiges Entfernen des losen Partikelmaterials bzw. eine vereinfachte Entnahme des Bauteils aus der Partikelmaterialschüttung (bzw. aus dem Bauraum oder der Baubox, in dem/der das Bauteil und die Partikelmaterialschüttung aufgenommen sind) ermöglichen, insb. auch für einen großen Bauraum bzw. eine große Baubox.

Es ist eine alternative oder zusätzliche Aufgabe der vorliegenden Erfindung, ein Verfahren und eine Vorrichtung zur Verfügung zu stellen, welche ein schnelles Entpacken des Bauteils aus der Partikelmaterialschüttung ermöglichen, insb. auch für einen großen Bauraum bzw. eine große Baubox.

Es ist eine alternative oder zusätzliche Aufgabe der vorliegenden Erfindung, ein Verfahren und eine Vorrichtung zur Verfügung zu stellen, welche ein sanftes Entpacken des Bauteils aus der Partikelmaterialschüttung erlauben, d.h. mit denen die Möglichkeit einer Beschädigung des Bauteils zumindest reduziert werden kann, insb. auch für einen großen Bauraum bzw. eine große Baubox.

Es ist eine alternative oder zusätzliche Aufgabe der vorliegenden Erfindung, ein Verfahren und eine Vorrichtung zur Verfügung zu stellen, mit denen das Entpacken des Bauteils aus der Partikelmaterialschüttung leicht/einfach zu automatisieren ist bzw. gesteuert ablaufen kann.

Es ist eine alternative oder zusätzliche Aufgabe der vorliegenden Erfindung, ein Verfahren und eine Vorrichtung zur Verfügung zu stellen, mit denen das Bauteil selbst/auch aus einer schlecht rieselbaren Partikelmaterialschüttung zuverlässig entpackt werden kann, insb. auch für einen großen Bauraum bzw. eine große Baubox.

Es ist eine alternative oder zusätzliche Aufgabe der vorliegenden Erfindung, ein Verfahren und eine Vorrichtung zur Verfügung zu stellen, mit denen das Bauteil auch aus einem relativ großen Bauraum zuverlässig entpackt werden kann.

Es ist eine alternative oder zusätzliche Aufgabe der vorliegenden Erfindung, ein Verfahren und eine Vorrichtung zur Verfügung zu stellen, mit denen das von dem Bauteil abgetrennte Partikelmaterial leicht zu sammeln ist, z.B. um das Partikelmaterial wieder zu verwenden.

Es ist eine alternative oder zusätzliche Aufgabe der vorliegenden Erfindung, ein Verfahren und eine Vorrichtung zur Verfügung zu stellen, mit denen ein beim Entpacken auftretender Verschleiß von mit dem Partikelmaterial in Berührung kommenden Vorrichtungen gering gehalten werden kann.

Es ist eine alternative oder zusätzliche Aufgabe der vorliegenden Erfindung, ein Verfahren und eine Vorrichtung zur Verfügung zu stellen, mit denen das Entpacken in einer vergleichsweise niedrigen Baubox erfolgen kann.

Zur Lösung von zumindest einer dieser Aufgaben stellt die Erfindung ein Verfahren zum Entpacken eines Bauteils gemäß Anspruch 1 sowie eine Vorrichtung gemäß Anspruch 10 bereit. Weitere Ausgestaltungen des erfindungsgemäßen Verfahrens und der erfindungsgemäßen Vorrichtung sind in den abhängigen Ansprüchen beschrieben.

Die Erfindung beschreibt ein Verfahren zum Entpacken eines mittels eines generativen Fertigungsverfahrens hergestellten Bauteils aus einer Partikelmaterial-Schüttung aus losem, nicht-verfestigtem Partikelmaterial, welche gemeinsam mit dem Bauteil in einem Bauraum angeordnet ist und das Bauteil umgibt, wobei zum Entpacken des Bauteils die das Bauteil umgebende Partikelmaterial-Schüttung in ein Fließbett überführt wird, so dass das lose, nicht-verfestigte Partikelmaterial fluidisiert wird/vorliegt, und das fluidisierte nicht-verfestigte Partikelmaterial nach unten hin aus dem Bauraum heraus abgelassen wird.

Das Bauteil kann z.B. mittels eines 3D-Druckverfahrens hergestellt sein; alternativ z.B. mittels selektiven Lasersinterns. Es sind aber auch andere generative Fertigungsverfahren denkbar/möglich, insb. pulverbasierte Fertigungsverfahren. Derartige Fertigungsverfahren sind dem Fachmann wohl bekannt und z.B. in den obigen Dokumenten beschrieben. Z.B. kann das Bauteil in dem Bauraum schichtweise aus Partikelmaterial/Pulvermaterial aufgebaut werden/sein (Anmerkung: der Bauraum aus Anspruch 1, in dem die Schüttung samt Bauteil aufgenommen ist, kann muss aber nicht-zwingend identisch sein zu dem Bauraum (einschl. dessen Begrenzung), in dem das Bauteil zuvor hergestellt wird). Die jeweilige. Partikelmaterialschicht kann dabei selektiv in einem vorbestimmten Teilbereich davon verfestigt werden, so dass das Bauteil aus selektiv verfestigten übereinander liegenden und sich zumindest teilweise überlappenden Teilbereichen aufgebaut werden kann. Z.B. kann das zu fertigende Bauteil schichtweise aus Partikelmaterial aufgebaut werden, indem zunächst in einem Bauraum eine erste Partikelmaterialschicht auf eine sog. Bauplattform aufgebracht wird. Der Bauraum kann umfangsseitig von einer seitlichen, vertikalen Umfangswandung begrenzt sein und nach oben hin offen sein. Nach unten hin kann der Bauraum von der Bauplattform begrenzt sein. Die Bauplattform kann z.B. höhenverstellbar in der Umfangswandung aufgenommen sein. Z.B. kann der Bauraum von einer sog. Baubox gebildet/definiert sein, welche z.B. verfahrbar sein kann, z.B. mittels eines eigenen in die Baubox integrierten Baubox-Fahrantriebs (alternativ kann die Baubox stationär ausgebildet sein). Nach dem Aufbringen der ersten Partikelmaterialschicht auf die Bauplattform mittels eines sog. Beschichters, kann die erste Partikelmaterialschicht selektiv in einem Teilbereich davon verfestigt werden, z.B. durch Aufdrucken eines geeigneten Bindemittels, z.B. mittels einer geeigneten Druckvorrichtung. Anschließend kann die Bauplattform um eine Schichtdicke nach unten abgesenkt werden, eine zweite Partikelmaterialschicht auf die erste Partikelmaterialschicht aufgebracht werden, und die zweite Partikelmaterialschicht selektiv in einem Teilbereich davon verfestigt werden. Diese Schritte können solange wiederholt werden, bis das Bauteil fertiggestellt ist. Eine geeignete Druckvorrichtung, ein geeigneter Beschichter, eine geeignete Baubox bzw. eine geeignete Anlage zur Verwendung in einem solchen Verfahren sind z.B. in den folgenden Anmeldungen/Patenten beschrieben : DE 10 2009 056 695, DE 10 2009 056 688, DE 10 2009 056 689, DE 10 2009 056 686, DE 10 2009 056 696, DE 10 2009 056 694 und DE 10 2009 056 687.

Am Ende des Bauprozesses/Herstellungsprozesses können in der Partikelmaterial-Schüttung ein oder mehrere Bauteile angeordnet sein. Mehrere Bauteile können z.B. in einer gemeinsamen horizontalen Lage oder Ebene innerhalb des Bauraums angeordnet sein (in welchem Fall sie gleichzeitig bzw. nebeneinander gefertigt worden sind) und/oder in vertikaler Richtung übereinander innerhalb des Bauraums angeordnet sein (in welchem Fall sie nacheinander gefertigt worden sind).

Das zumindest eine Bauteil kann also aus verfestigtem Partikelmaterial (bzw. aus selektiv verfestigten Teilbereichen von aufeinanderfolgenden Partikelmaterial-Schichten) gebildet und z.B. eine Gussform oder ein Gießkern sein, z.B. eine Sandgussform oder ein Sandgießkern.

Das Partikelmaterial oder Baumaterial kann z.B. Sandpartikel aufweisen. Z.B. können für das Partikelmaterial Sandpartikel verwendet werden, welche aus der Gruppe ausgewählt sind, welche aus Quarzsandpartikeln, Aluminiumoxidsandpartikeln, Zirkonsandpartikeln, Olivinsandpartikeln, Silikatsandpartikeln, Chromitsanpartikeln und Kombinationen davon besteht. Das Partikelmaterial kann aber auch andere Bau-Partikel aufweisen, z.B. Metall- oder Kunststoffpartikel, so dass die Erfindung nicht auf die Verwendung von Sandpartikeln eingeschränkt ist. Das Partikelmaterial kann Bau-Partikel mit einer durchschnittlichen Partikelgröße von 90 bis 250 µm haben, z.B. einer durchschnittlichen Partikelgröße von 90 bis 200 µm, z.B. einer durchschnittlichen Partikelgröße von 110 bis 180 µm. Neben den sog. Bau-Partikeln, aus denen das Bauteil primär aufgebaut ist/wird, kann das Partikelmaterial auch Zusatzstoffe aufweisen, z.B. eine pulverförmige Komponente eines Mehrkomponentenbinders.

Nach der Herstellung des mindestens einen Bauteils in dem Bauraum ist das Bauteil somit in einer Partikelmaterial-Schüttung-eingebettet, z.B. nach ein oder mehreren oder allen Seiten hin (umfangsseitig, nach oben hin, nach unten hin) von losem bzw. nicht-verfestigtem Partikelmaterial umgeben. Das zumindest eine Bauteil kann nun in einem sog. Entpackungsschritt ausreichend von dem nicht-verfestigten Partikelmaterial befreit werden. Mit anderen Worten kann das Bauteil ausreichend freigelegt werden. Nicht-verfestigtes Partikelmaterial bezeichnet dabei Partikel, die nicht mit anderen Partikeln unter Ausbildung des Bauteils verbunden sind, d.h. Partikel außerhalb des jeweiligen, selektiv verfestigten Teilbereichs einer Schicht. Nach dem Entpacken bzw. dem Ablassen von nicht-verfestigtem Partikelmaterial können die Gegenstände/Bauteile aus dem Bauraum bzw. der Baubox entnommen werden, z.B. manuell oder automatisiert (z.B. mittels einer Greifvorrichtung bzw. eines Roboters).

Erfindungsgemäß wird zum Entpacken des Bauteils die das Bauteil umgebende Partikelmaterial-Schüttung in ein Fließbett bzw. eine Wirbelschicht überführt, so dass das lose, nicht-verfestigte Partikelmaterial fluidisiert wird/vorliegt, und das fluidisierte nicht-verfestigte Partikelmaterial wird nach unten hin aus dem Bauraum abgelassen.

Die nach dem Fertigungsprozess in dem Bauraum vorliegende feste Partikelmaterial-Schüttung wird also aufgelockert und in einen fluidisierten Zustand versetzt (insbesondere vollständig), so dass die ehemals feste Partikelmaterial-Schüttung nun fluidisiert vorliegt und somit fluidähnliche bzw. flüssigkeitsähnliche Eigenschaften aufweist. In dem fluidisierten Zustand oder Fließbett/Wirbelschicht-Zustand kann das nicht-verfestigte Partikelmaterial problemlos durch entsprechende Abfluss-Durchgangsöffnungen hindurch nach unten hin aus dem Bauraum abgelassen werden, z.B. frei abfließen (z.B. ohne das Anlegen eines Vakuums). Selbst ansonsten schwer/kaum rieselbare Pärtikelmäterial-Schüttungen können nach deren Fluidisierung bzw. Überführung in die Wirbelschicht problemlos von dem Bauteil abgetrennt werden, und Bauteile können selbst aus vergleichsweise großen Bauräumen bzw. einer darin angeordneten Partikelmaterial-Schüttung zuverlässig entpackt werden.

Z.B. kann das Partikelmaterial erst nach dem Ausbilden der Wirbelschicht aus dem Bauraum abgelassen werden. Es ist allerdings auch denkbar, das lose Partikelmaterial bereits vor dem Vorliegen der Wirbelschicht teilweise abzulassen (soweit möglich), z.B. soweit möglich aus den Abfluss-Öffnungen heraus rieseln zu lassen. Anschließend kann das verbleibende Partikelmaterial fluidisiert werden (durch Erzeugen der Wirbelschicht) und das fluidisiert vorliegende Partikelmaterial abgelassen werden.

Bei dem erfindungsgemäßen Entpacken des (zumindest einen) Bauteils kann z.B. zumindest so viel nicht-verfestigtes Partikelmaterial der Partikelmaterial-Schüttung aus dem Bauraum abgelassen werden, dass das (zumindest eine) Bauteil anschließend, d.h. nach dem Entpacken, (manuell oder automatisiert) ergriffen und aus dem Bauraum entnommen werden kann. Z.B. liegt nach dem Entpacken zumindest ein Teil, z.B. ein überwiegender Teil, des Bauteils frei, d.h. ist nicht mehr von nicht-verfestigtem Partikelmaterial bedeckt. In dem Entpackungsverfahren wird das Bauteil also ausreichend freigelegt. Z.B. kann bei dem erfindungsgemäßen Entpacken ein überwiegender Teil (mehr als die Hälfte) des nicht-verfestigten Partikelmaterials der Partikelmaterial-Schüttung aus dem Bauraum abgelassen werden. Z.B. können geringe Mengen an nicht-verfestigtem Partikelmaterial in dem Bauraum verbleiben.

Eine Wirbelschicht sowie deren Erzeugung sind dem Fachmann wohl bekannt. Eine feste bzw. ruhende Schüttung wird dabei von unten nach oben mit einem Fluid durchströmt, wobei die Schüttung von einer bestimmten Strömungsgeschwindigkeit an in die Wirbelschicht übergeht (sog. Wirbelpunkt). Bei einer weiteren Anhebung der Strömungsgeschwindigkeit würden die Partikel von einem bestimmten Punkt an bzw. bei einer bestimmten Strömungsgeschwindigkeit pneumatisch gefördert werden, d.h. nach oben hin aus dem Bauraum ausgetragen werden. Die loses-Partikelmaterial-Wirbelschicht bzw. das loses-Partikelmaterial-Fließbett nimmt gegenüber der festen bzw. ruhenden Partikelmaterial-Schüttung aus losem Partikelmaterial ein größeres Volumen ein, bzw. nimmt in dem Bauraum eine größere Höhe ein. Bauteile mit größerer Dichte als das Bett können in dem Fließbett nach unten absinken.

Die Wirbelschicht kann z.B. während des gesamten Entpackungsvorgangs oder z.B. zumindest über einen überwiegenden Zeitraum des gesamten Entpackungsvorgangs hinweg ausgebildet werden/bleiben bzw. vorliegen (intermittierend oder am Stück). D.h., das erfindungsgemäße Verfahren deckt z.B. einen Fall ab, in dem zumindest während eines zeitlichen Abschnitts des Entpackens die Partikelmaterial-Schüttung in Form von einer Wirbelschicht vorliegt (d.h., die Wirbelschicht wird aufrechterhalten) und derart fluidisiertes Partikelmaterial der Partikelmaterial-Schüttung/Wirbelschicht nach unten hin aus dem Bauraum abgelassen wird.

Erfindungsgemäß wird das fluidisierte nicht-verfestigte Partikelmaterial nach unten hin aus dem Bauraum abgelassen. Insbesondere bei großen Bauräumen kann das nicht-verfestigte Partikelmaterial so zuverlässig und schnell aus dem Bauraum abgelassen werden. Auf ein seitliches Ablassen oder ein Entfernen des Baumaterials durch eine obere Öffnung des Bauraums kann z.B. vollständig verzichtet werden. Die Bauplattform kann z.B. in einem unteren Bereich des Bauraums verbleiben, in dem sie sich nach dem Aufbauen des Bauteils ohnehin befindet.

Das Bauteil kann somit zunächst in dem Bauraum hergestellt werden und anschließend aus diesem Bauraum zuverlässig entpackt werden. Der Bauraum kann dabei von einer verfahrbaren Baubox gebildet sein, die nach dem Aufbauen des Bauteils in einer entsprechenden Anlage aus dieser heraus und in eine Entpackungsstation hinein gefahren wird. Dort kann das Bauteil unter Anwendung des erfindungsgemäßen Verfahrens zuverlässig und sicher entpackt werden. Alternativ kann das Entpacken aber auch direkt in der Anlage zum Aufbauen des Bauteils bzw. in der Aufbauposition der Baubox erfolgen.

Gemäß der Erfindung ist der Bauraum nach unten hin von einer Bauplattform (z.B. einer höhenverstellbar in dem Bauraum oder der Baubox aufgenommenen Bauplattform) begrenzt, auf/oberhalb der die das Bauteil enthaltende Partikelmaterial-Schüttung angeordnet ist, wobei das fluidisierte nicht-verfestigte Partikelmaterial durch die Bauplattform hindurch nach unten hin abgelassen wird. Die Bauplattform ist somit als Partikelmaterial-Abfluss-Boden ausgebildet. Die Bauplattform kann fester Bestandteil der Baubox und in diese integriert sein.

D.h., das Bauteil kann zunächst auf der Bauplattform gefertigt werden, z.B. indem das Baumaterial/Partikelmaterial schichtweise unter Ausbildung aufeinanderliegender Schichten auf die Bauplattform aufgebracht wird und indem auf einen für die jeweilige Schicht vorbestimmten Teilbereich vor dem Aufbringen einer nächstfolgenden Schicht ein fließfähiges Bindemittel dosiert aufgetragen wird, wobei die Partikel des Baumaterials in dem vorbestimmten Teilbereich vermittels des Bindemittels miteinander verbunden werden. Nach seiner Herstellung ist das Bauteil und die dasselbe umgebende Partikelmaterial-Schüttung auf/oberhalb der Bauplattform angeordnet, und das fluidisierte nicht-verfestigte Partikelmaterial kann durch die Bauplattform hindurch nach unten hin abgelassen werden. Mit andere Worten kann das nicht-verfestigte Partikelmaterial nach unten durch die Bauplattform hindurch aus dem Bauraums abfließen7abrieseln. Das nicht-verfestigte Partikelmaterial bzw. ein ausreichender oder überwiegender Teil davon kann somit effizient und zuverlässig von dem Bauteil abgetrennt und aus dem Bauraum entfernt werden.

Anschließend kann das Bauteil aus dem Bauraum entnommen werden, z.B. manuell oder automatisiert, z.B. nachdem die Bauplattform ggf. etwas nach oben gefahren wurde (die Fluidisierung der Partikelmaterial-Schüttung erfolgt z.B. mit nach unten gefahrener Bauplattform). Das aus dem Bauraum entnommene Bauteil kann dann einer weiteren Reinigung bzw. weiteren Behandlungsschritten unterzogen werden.

In der Bauplattform sind ein oder mehrere Partikelmaterial-Abfluss-Durchgangsöffnungen ausgebildet, welche mittels eines Schließmechanismus wahlweise/selektiv schließbar sind und geöffnet werden können, wobei die ein oder mehreren Partikelmaterial-Abfluss-Durchgangsöffnungen zum Ablassen des fluidisierten nicht-verfestigten Partikelmaterials mittels/durch Betätigen des Schließmechanismus geöffnet werden, so dass das fluidisierte nicht-verfestigte Partikelmaterial durch die ein oder mehreren Partikelmaterial-Abfluss-Durchgangsöffnungen hindurch nach unten hin abfließt. Während des Fertigungsprozesses können die ein oder mehreren Abfluss-Durchgangsöffnungen mittels des Schließmechanismus verschlossen werden/sein, so dass die aufeinanderfolgenden Partikelmaterialschichten sicher und zuverlässig auf der Bauplattform ausgebildet werden können. Die Bauplattform kann also z.B. von einer Lochplatte gebildet sein bzw. eine solche aufweisen, in der ein oder mehrere (vertikale bzw. in Dickenrichtung der Platte verlaufende) Abfluss-Durchgangsöffnungen ausgebildet sind. Mittels des Schließmechanismus können die Durchgangsöffnungen der Lochplatte/Bauplattform selektiv geschlossen bzw. geöffnet werden. Ein derartiger Schließmechanismus ist dem Fachmann grundsätzlich bekannt, z.B. aus der US 2008/0241404 (Klappen) oder der WO 2007/139938 A2 (zwei übereinander angeordnete, zueinander versetzte Lochplatten). Es kann ausreichend sein, eine einzige Abfluss-Durchgangsöffnung in der Bauplattform auszubilden/vorzusehen, z.B. in der Mitte davon. Um ein zügiges und gleichmäßiges Ablassen sicherzustellen, können mehrere Abfluss-Durchgangsöffnungen in der Bauplattform ausgebildet sein. Z.B. können mehrere Abfluss-Durchgangsöffnungen gleichmäßig über die Bauplattform hinweg verteilt sein. Z.B. können mehrere Partikelmaterial-Abfluss-Durchgangsöffnungen zu einzelnen Gruppen/Anordnungen von benachbarten Abfluss-Durchgangsöffnungen zusammengefasst sein, welche wiederum gleichmäßig über die Bauplattform hinweg verteilt sind.

Der Schließmechanismus kann z.B. ein Lochblech oder eine Lochplatte aufweisen, welche (im Wesentlichen) parallel zu der Bauplattform angeordnet ist (z.B. oberhalb oder unterhalb der Bauplattform, z.B. benachbart bzw. mit einem geringen Abstand dazu), eine oder mehrere Durchgangslöcher aufweist (z.B. eine zu der Anzahl von Partikelmaterial-Abfluss-Durchgangsöffnungen korrespondierende Anzahl von Durchgangslöchern) und relativ zu der Bauplattform zwischen einer Schließ-Position (in der die Partikelmaterial-Abfluss-Durchgangsöffnungen versperrt bzw. geschlossen sind; z.B. in der in dem Bauraum befindliches Partikelmaterial von dem Lochblech oder der Lochplatte daran gehindert ist (z.B. direkt oder indirekt durch auf diesem/dieser angesammeltem/angestautem Partikelmaterial (z.B. in Form eines Schüttkegels)), durch die ein oder mehreren Partikelmaterial-Abfluss-Durchgangsöffnungen hindurch nach unten abzufließen) und einer Öffnungs-Position (in der die Partikelmaterial-Abfluss-Durchgangsöffnungen freigegeben sind; z.B. in der in dem Bauraum befindliches Partikelmaterial durch die ein oder mehreren Partikelmaterial Abfluss Durchgangsöffnungen sowie die ein oder mehreren Durchgangslöcher hindurch nach unten abfließen kann) hin und her bewegbar ist, z.B. horizontal und/oder vertikal verschiebbar, wobei das Lochblech oder die Lochplatte relativ zu der Bauplattform in die Öffnungs-Position bewegt wird, um das fluidisierte nicht-verfestigte Partikelmaterial durch die ein oder mehreren Partikelmaterial-Abfluss-Durchgangsöffnungen hindurch nach unten abfließen zu lassen.

Alternativ kann der Schließmechanismus ein oder mehrere Drehteller aufweisen, welche drehbar unterhalb bzw. an der Unterseite der Bauplattform angeordnet sind, jeweils zwischen einer ersten Drehposition und einer zweiten Drehposition hin und her drehbewegbar sind (z.B. um die eigene Achse (Eigendrehbewegung)) und jeweils eine Mehrzahl von Durchgangslöchern aufweisen, welche in der ersten Drehposition mit einer Mehrzahl von zugeordneten Partikelmaterial-Abfluss-Durchgangsöffnungen fluchten und welche in der zweiten Drehposition von der Bauplattform verdeckt sind, so dass die zugeordneten Partikelmaterial-Abfluss-Durchgangsöffnungen verschlossen sind (von dem Drehteller), wobei die ein oder mehreren Drehteller von der zweiten Drehposition in die erste Drehposition gedreht werden, um die Partikelmaterial-Abfluss-Durchgangsöffnungen zu öffnen und das fluidisierte nicht-verfestigte Partikelmaterial durch die Partikelmaterial-Abfluss-Durchgangsöffnungen sowie die Durchgangslöcher hindurch nach unten abfließen zu lassen. Ein einziger Drehteller, z.B. ein bzgl. der Bauplattform mittig angeordneter Drehteller, kann ausreichend sein. Es können aber auch mehrere Drehteller vorgesehen sein. Diese können gleichmäßig über die die Bauplattform hinweg verteilt sein. Mehrere Drehteller können mechanisch miteinander gekoppelt sein, so dass sie gemeinsam von der zweiten in die erste Drehposition bewegbar sind, z.B. mittels eines Linearantriebs. Die mechanische Kopplung kann mit einem Stangenmechanismus aus gelenkig miteinander verbundenen Stangen erfolgen. Mehrere Drehteller können über eine Schub/Zug-Stange miteinander gekoppelt sein, z.B. indem ein jeweiliger Verbindungs-Arm sowohl an dem zugeordneten Drehteller als auch an der Stange angelenkt ist. Die Schub/Zug-Stange kann mit einem Linearantrieb in Verbindung stehen, der die Schub/Zug-Stange antreibt/bewegt, um die miteinander gekoppelten Drehteller gemeinsam zwischen der ersten und der zweiten Drehposition hin und her zu bewegen. Mehrere Schub/Zug-Stangen können über einen Querverbinder bzw. eine Querstange miteinander gekoppelt sein, der von dem Linearantrieb angetrieben wird. Der oder die Drehteller können nach unten hin von einer weiteren Platte bzw. einem Blech abgestützt sein, welche/welches als Verstärkungsplatte oder Verstärkungsblech dient, z.B. um die Drehteller während des Bauprozesses vor einer Durchbiegung zu schützen.

Ferner alternativ kann der Schließmechanismus eine zu der Anzahl von Partikelmaterial-Abfluss-Durchgangsöffnungen korrespondierende Anzahl von Verschlüssen aufweisen, die ausgebildet sind, um eine jeweils zugeordnete Partikelmaterial-Abfluss-Durchgangsöffnung selektiv zu verschließen und freizugeben, und die relativ zu der Bauplattform zwischen einer Schließ-Position, in der der jeweilige Verschluss die zugeordnete Partikelmaterial-Abfluss-Durchgangsöffnung verschließt, und einer Öffnungs-Position, in der der jeweilige Verschluss die zugeordnete Partikelmaterial-Abfluss-Durchgangsöffnung freigibt, vertikal und/oder horizontal hin und her bewegbar sind, wobei die Verschlüsse relativ zu der Bauplattform aus der Schließ-Position in die Öffnungs-Position bewegt werden, um das fluidisierte nicht-verfestigte Partikelmaterial durch die ein oder mehreren Partikelmaterial-Abfluss-Durchgangsöffnungen hindurch nach unten abfließen zu lassen. Die Verschlüsse können z.B. gemeinsam aus der Schließ-Position in die Öffnungs-Position hin und her bewegbar sein, z.B. indem sie mechanisch miteinander verbunden/gekoppelt sind, z.B. über ein Gestänge oder eine Platte. Die Verschlüsse können z.B. unterhalb der Bauplattform angeordnet sein. Alle oder mehrere (d.h. zumindest ein Teil) der Verschlüsse können z.B. Stopfen bzw. Stöpsel aufweisen/sein, welche in der Schließ-Position in der zugeordneten Partikelmaterial-Abfluss-Durchgangsöffnung angeordnet sind (zumindest teilweise) und dadurch ein Abfließen des Partikelmaterials verhindern und welche aus der Schließ-Position in vertikaler Richtung nach unten in die Öffnungs-Position bewegbar sind. Die Stöpsel können dabei in der Schließ-Position direkt gegen zumindest einen Teil der jeweiligen Lochumfangswandung abdichten (bzw. an dieser anliegen) oder alternativ einen Ringspalt gegenüber/mit dieser dieser ausbilden, der klein genug ist, um ein Abfließen des Partikelmaterials zu verhindern (z.B. weil der Ringspalt kein Partikelmaterial durchlässt oder weil der Ringspalt, mit Partikelmaterial zugelegt wird bzw. verstopft oder weil der Ringspalt zur Ausbildung eines Schüttkegels führt/beiträgt, der sich unterhalb der Bauplattform bildet und ein (weiteres) Abfließen des Partikelmaterials verhindert). Insbesondere wenn die Verschlüsse als Stopfen ausgebildet sind, kann es vorteilhaft sein, die jeweils zugeordnete Partikelmaterial-Abfluss-Durchgangsöffnung konusförmig auszugestalten, wobei sich die jeweilige Öffnung nach oben hin verjüngt. Dabei kann der jeweilige Stöpsel z.B. ebenfalls konusförmnig ausgebildet sein, z.B. konträr zu dem zugeordneten Loch. Z.B. kann der jeweilige Stopfen aus Gummi hergestellt sein. Zusätzlich oder alternativ können alle oder mehrere (d.h. zumindest ein Teil) der Verschlüsse z.B. Deckel bzw. Teller aufweisen/sein, welche in der Schließ-Position die zugeordnete Partikelmaterial-Abfluss-Durchgangsöffnung zumindest teilweise verdecken und dadurch ein Abfließen des Partikelmaterials verhindern und welche aus der Schließ-Position-in vertikaler und/oder horizontaler Richtung in die Öffnungs-Position bewegbar sind.

Es kann aber auch ein anderer geeigneter Schließmechanismus verwendet werden.

Gemäß einer alternativen oder zusätzlichen Ausführungsform fließt das fluidisierte nicht-verfestigte Partikelmaterial saugfrei durch die Bauplattform bzw. deren Partikelmaterial-Abfluss-Durchgangsöffnungen hindurch nach unten hin aus dem Bauraum ab. Mit anderen Worten wird das Partikelmaterial nicht abgesaugt. D.h., es wird kein Vakuum bzw. Sog an die Partikelmaterial-Abfluss-Durchgangsöffnungen angelegt, sondern das fluidisierte nicht-verfestigte Partikelmaterial fließt/strömt frei durch die Partikelmaterial-Abfluss-Durchgangsöffnungen hindurch ab, z.B. ausschließlich Schwerkraft-bedingt. Das Partikelmaterial kann somit lediglich durch Öffnen/Freigeben der Partikelmaterial-Abfluss-Durchgangsöffnungen abgelassen bzw. von dem Bauteil abgetrennt werden. Eine Vakuumerzeugungseinrichtung kann ebenso eingespart werden wie entsprechende Verbindungsschläuche von der Vakuumerzeugungseinrichtung zu den Partikelmaterial-Abfluss-Durchgangsöffnungen, wobei das Bauteil dennoch zuverlässig entpackt werden kann. Z.B. kann das Partikelmaterial in einen unterhalb des Bauraums angeordneten Auffangbehälter hinein fließen, in dem das von dem Bauteil abgetrennte nicht-verfestigte Partikelmaterial gesammelt wird (z.B. kann das Partikelmaterial von den Partikelmaterial-Abfluss-Durchgangsöffnungen aus direkt und frei in die den Auffangbehälter hinein fallen oder rieseln). Von dort aus kann das nicht-verfestigte Partikelmaterial dem Herstellungsprozess (generatives Fertigungsverfahrens, z.B. Rapid-Prototyping-Verfahren zum Herstellen eines Bauteils) rückgeführt bzw. recycelt werden, z.B. nach einem optionalen Partikelmaterial-Aufbereitungsschritt.

Gemäß einer alternativen oder zusätzlichen Ausführungsform wird das fluidisierte nicht-verfestigte Partikelmaterial zum Entpacken des Bauteils überwiegend oder ausschließlich durch die oben beschriebene Bauplattform bzw. deren Partikelmaterial-Abfluss-Durchgangsöffnungen hindurch nach unten hin aus dem Bauraum abgelassen. Mit anderen Worten wird das Partikelmaterial zum Entpacken des Bauteils nicht seitlich abgelassen, d.h. nicht durch die vertikale Seitenwand/Umfangswand der Baubox hindurch. Hierdurch kann ein aufwendiger Aufbau der Baubox vermieden werden. Die Innenseite der Seitenwand/Umfangswand der Baubox kann somit Loch-frei ausgebildet sein, d.h. es müssen keine Löcher an der Innenseite der Seitenwand/Umfangswand vorgesehen sein, insb. keine Partikelmaterial-Abfluss-Durchgangsöffnungen. Z.B. kann mit dem erfindungsgemäßen Verfahren ein seitliches Blasen und/oder Absaugen vollständig entfallen, wobei das Bauteil dennoch zuverlässig entpackt werden kann. Z.B. kann das Partikelmaterial in einen unterhalb des Bauraums angeordneten Auffangbehälter abfließen bzw. hineinrieseln, in dem das von dem Bauteil abgetrennte nicht-verfestigte Partikelmaterial gesammelt wird. Wie bereits erwähnt, kann das nicht-verfestigte Partikelmaterial von dort aus dem Herstellungsprozess (generatives Fertigungsverfahren, z.B. Rapid-Prototyping-Verfahren zum Herstellen eines Bauteils) rückgeführt bzw. recycelt werden, z.B. nach einem optionalen Aufbereitungsschritt.

Generell kann das Partikelmaterial in einen unterhalb des Bauraums angeordneten Auffangbehälter abgelassen werden bzw. hinein rieseln, in dem das von dem Bauteil abgetrennte nicht-verfestigte Partikelmaterial gesammelt wird. Das derart gesammelte Baumaterial kann z.B. mittels einer Fördereinrichtung, z.B. einer Förderschnecke, entsorgt oder wiederverwendet/recycelt werden.

Die Fluidisierung der Partikelmaterial-Schüttung bzw. die Überführung der Partikelmaterial-Schüttung in das Fließbett erfolgt durch die Bauplattform hindurch bzw. ausgehend von dieser, so dass die Bauplattform gleichzeitig als Wirbelboden und als Partikelmaterial-Abfluss-Boden ausgebildet ist. Das lose Partikelmaterial wird also zum Entpacken des Bauteils zeitgleich/gleichzeitig ausgehend von bzw. durch die Bauplattform hindurch fluidisiert bzw. in das Fließbett überführt und in dem fluidisierten Zustand bzw. dem Wirbelschicht/Fließbett-Zustand durch die Bauplattform hindurch aus dem Bauraum abgelassen. Insbesondere werden gleichzeitig ein Fluidstrom nach oben durch die Bauplattform eingeleitet und ein Partikelstrom nach unten durch die Bauplattform ausgeleitet.

D.h., gemäß der Erfindung ist die Bauplattform als ein sog. Wirbelboden ausgebildet, d.h. die Bauplattform ist angepasst, um die darüber angeordnete Partikelmaterial-Schüttung in ein Fließbett zu überführen. Sowohl die Fluidisierung der Partikelmaterial-Festschüttung als auch das Ablassen des fluidisierten Partikelmaterials erfolgen also durch die Bauplattform hindurch bzw. ausgehend von dieser, insb. zeitgleich. Ein solcher Wirbelboden kann Fluidisierungsmittel aufweisen, z.B. Fluid-Einblasdüsen und/oder Fluid-Durchström-Poren; siehe unten. Die Fluidisierungsmittel können gleichmäßig über die Bauplattform hinweg verteilt sein und/oder zwischen den Abfluss-Durchgangslöchern bzw. den Gruppen von Abfluss-Durchgangslöchern (z.B. zwischen den Drehtellern) angeordnet sein.

Gemäß einem Ausführungsbeispiel kann also gleichzeitig Fluid zum Fluidisieren der Partikelschüttung durch die Bauplattform hindurch in die Partikelmaterial-Schüttung eingeleitet und fluidisiertes nicht-verfestigtes Partikelmaterial durch die Partikelmaterial-Abfluss-Durchgangsöffnungen der Bauplattform hindurch nach unten hin abgelassen werden.

Die Partikelmaterial-Schüttung wird unter Verwendung von einem (Druck-)Fluid in ein Fließbett bzw. eine Wirbelschicht überführt. Zur Erzeugung des Fließbetts wird das Fluid derart (z.B. mit einem solchen Druck oder einer solchen Strömungsgeschwindigkeit) durch die Bauplattform hindurch von unten in die Partikelmaterial-Schüttung hinein eingeleitet, dass die Partikelmaterial-Schüttung von dem Fluid von unten nach oben durchströmt wird und das lose, nicht-verfestigte Partikelmaterial mittels des Fluids aufgelockert und unter Ausbildung einer Wirbelschicht fluidisiert wird. Unterstützend kann Fluid optional seitlich in die Schüttung eingeblasen werden. Das Fluid kann z.B. ein Gas oder ein Gasgemisch sein. Z.B. kann das Fluid Luft sein oder enthalten.. Z.B. kann das Fluid ein Inertgas sein oder enthalten. Das Fluid kann temperiert werden/sein, um die Partikelmaterial-Schüttung bzw. das darin enthaltene Bauteil zu kühlen oder zu erwärmen. Der Druck oder die Strömungsgeschwindigkeit oder der Volumenstrom des dem Bauraum zugeführten Fluids kann geregelt oder gesteuert werden, insb. derart, dass die Partikelmaterial-Schüttung in das Fließbett überführt wird und während des Entpackungsvorgangs zumindest für eine vorbestimmte Zeitdauer (z.B. eine überwiegende Zeitdauer) in dem Fließbett/Wirbelschicht-Zustand gehalten wird.

Hierzu kann die Bauplattform (bzw. der Wirbelboden) eine Mehrzahl von Fluid-Einlassöffnungen aufweisen (z.B. gebildet von Poren oder Düsen oder Kanälen), durch die das Fluid von der Bauplattform aus in die Schüttung eingeleitet wird. Z.B. kann die Bauplattform (bzw. der Wirbelboden) eine Mehrzahl von Fluid-Einblasdüsen/Einleitdüsen aufweisen, mittels derer das Fluid in die Partikelmaterial-Schüttung hinein eingeleitet wird. Z.B. kann eine Mehrzahl von Fluid-Einblasdüsen in die Bauplattform integriert sein. Z.B. sind die Fluid-Einblasdüsen gleichmäßig über die Bauplattform hinweg verteilt. Alternativ oder zusätzlich kann die Bauplattform-zumindest abschnittsweise porös ausgebildet sein und das Fluid durch die Poren der Bauplattform hindurch in die Partikelmaterial-Schüttung hinein eingeleitet werden. D.h., die Bauplattform kann z.B. aus einem porösen Material hergestellt sein, z.B. aus einer porösen Sinterplatte. Alternativ kann die Bauplattform eine oder mehrere poröse Einsätze (z.B. poröse Sintereinsätze) aufweisen, die in entsprechende Ausnehmungen der Bauplattform eingesetzt und z.B. gleichmäßig über die Bauplattform hinweg verteilt sind. Die Poren und/oder die Austrittsöffnungen der Düsen können derart ausgebildet/dimensioniert sein, dass Partikelmaterial der Schüttung nicht durch die Poren bzw. die Austrittsöffnungen der Düsen hindurch nach unten hin durchfällt. D.h., die Poren und/oder die Austrittsöffnungen der Düsen können kleiner dimensioniert sein als die Partikel der Schüttung. Die Poren und/oder die Austrittsöffnungen der Düsen müssen daher während der Herstellung des Bauteils nicht verschlossen werden und können während des Herstellprozesses dazu verwendet werden, um Fluid in die Schüttung bzw. den Bauraum einzuleiten (z.B. um die Schüttung zu kühlen oder zu heizen oder um bestimmte Komponenten aus der Schüttung abzuführen). Ferner alternativ können in Dickenrichtung der Bauplattform Durchgangskanäle vorgesehen sein, deren jeweilige Öffnung, die der Schüttung zugewandt ist, mit einem Sieb verschlossen ist, das ein Durchfallen der Partikel verhindert aber ein nach oben Strömen des Fluids ermöglicht.

Das Fluid kann z.B. mittels eines Kompressors/Verdichters oder einer Pumpe mit Druck beaufschlagt und dann dem Bauraum zugeführt werden, z.B. über die Poren und/oder die Düsen. Alternativ kann das Fluid aber auch aus einem Druckbehälter entnommen und dann dem Bauraum zugeführt werden, z.B. über die Poren und/oder die Düsen.

Wie bereits erwähnt, kann die Strömungsgeschwindigkeit oder der Druck des dem Bauraum zugeführten Fluids zum Entpacken des Bauteils derart gesteuert/eingestellt/geregelt werden, dass das lose, nicht-verfestigte Partikelmaterial mittels des Fluids aufgelockert und unter Ausbildung der Wirbelschicht fluidisiert wird. Z.B. wird die Strömungsgeschwindigkeit oder der Druck des dem Bauraum zugeführten Fluids während des gesamten oder zumindest während des überwiegenden Teils des Entpackungsprozesses derart gesteuert/eingestellt/geregelt, dass die Wirbelschicht erzeugt wird und bestehen bleibt. Es liegt dann während des gesamten oder zumindest während des überwiegenden Teils des Entpackungsprozesses eine Wirbelschicht vor.

Es kann erforderlich/zweckdienlich sein, die Strömungsgeschwindigkeit oder den Druck des Fluids während des Entpackungsprozesses allmählich zu reduzieren (mit abnehmender Höhe der Partikelmaterial-Schüttung bzw. des Fließbetts), so dass ein Austrag des Partikelmaterials nach oben vermieden wird. Z.B. kann die Baubox auf Wiegezellen stehen, um das Gewicht der Baubox bzw. der darin enthaltenen Partikelmaterial-Schüttung zu erfassen, und die Strömungsgeschwindigkeit oder der Druck des Fluids kann gemäß des erfassten Gewichts gesteuert/eingestellt/geregelt werden. Alternativ kann z.B. ein Füllstands-Sensor vorgesehen sein, der die Höhe der Partikelmaterial-Schüttung abtastet/detektiert.

Das Fluid kann z.B. kontinuierlich (z.B. mit einem konstanten oder stetig abnehmenden Druck) und/oder Stoß-frei zugeführt werden.

Alternativ kann das Fluid stoßartig unter Erzeugung mehrerer zeitlich aufeinanderfolgender Fluidstöße von unten in die Partikelmaterial-Schüttung hinein eingeleitet wird, z.B. gepulst oder getaktet. Hierdurch können Inhomogenitäten bzw. unterschiedliche/variierende Verwirbelungen in die Partikelmaterial-Schüttung bzw. die Wirbelschicht eingebracht werden, wodurch in Randbereichen und/oder Bauteil-Hinterschneidungen befindliches Partikelmaterial noch besser fluidisiert werden kann. Die Fluidstöße können eine gelichbleibende oder variierende Frequenz haben. Die Fluidstöße können gleich stark oder unterschiedlich stark sein.

Gemäß einer Ausführungsform der Erfindung sind die Fluidisierungsmittel des Wirbelbodens (d.h., z.B. die Fluid-Einblasdüsen und/oder die Poren) von dem Schließmechanismus zumindest bei geöffneten Partikelmaterial-Abfluss-Durchgangsöffnungen freigegeben, d.h. die Fluidisierungsmittel des Wirbelbodens (z.B. die Fluid-Einblasdüsen und/oder die Poren) werden bei geöffneten Partikelmaterial-Abfluss-Durchgangsöffnungen nicht von dem Schließmechanismus blockiert oder zugelegt.

Gemäß einer weiteren Ausführungsform der Erfindung sind die Fluidisierungsmittel des Wirbelbodens (d.h., z.B. die Fluid-Einblasdüsen und/oder die Poren) von dem Schließmechanismus sowohl bei geöffneten als auch bei geschlossenen Partikelmaterial-Abfluss-Durchgangsöffnungen freigegeben. Hierdurch können die Fluidisierungsmittel des Wirbelbodens auch während des Bauprozesses/Herstellungsprozesses des Bauteils eingesetzt werden. Ferner kann hierdurch die Wirbelschicht erzeugt werden, bevor die Partikelmaterial-Abfluss-Durchgangsöffnungen geöffnet werden, d.h., beim Öffnen/Freigeben der Partikelmaterial-Abfluss-Durchgangsöffnungen liegt in diesem Fall bereits ein Fließbett und somit fließfähiges Partikelmaterial vor.

Zusätzlich zu dem Fluid können weitere Maßnahmen zum Auflockern der Partikelmaterial-Schüttung angewandt werden. Z.B. können ergänzend Schallwellen eingesetzt werden, oder es kann ergänzend eine Vibrationsvorrichtung eingesetzt werden, welche die Umfangswand und/oder die Bauplattform in Vibrationen versetzt. Allerdings kann das erfindungsgemäße Verfahren auch ohne solche zusätzlichen Maßnahmen durchgeführt werden .

Das obige Verfahren zum Entpacken eines Bauteils kann kombiniert werden mit einem Verfahren zum Herstellen eines oder mehrerer Bauteile mittels eines generativen Fertigungsverfahrens, wobei bei dem generativen Fertigungsverfahren in dem Bauraum sämtliche Bauteile in der Draufsicht nebeneinander hergestellt werden (d.h. nicht übereinander), z.B. in einer einzigen horizontalen Bauteil-Lage. Dadurch kann vermieden werden, dass die Bauteile beim Ablassen des fluidisierten Partikelmaterials beschädigt werden, z.B. weil ein Fallen/Absacken eines Bauteils auf ein darunter liegendes Bauteil vermieden wird.

Zusätzlich oder alternativ kann das Bauteil bzw. eines oder mehrere oder alle der Bauteile eine jeweilige Stütz- oder Haltestruktur aufweisen, die bei dem generativen Fertigungsverfahren zusammen mit dem jeweiligen Bauteil mitausgebildet wird, wodurch beim Entpacken der Bauteile, wenn das fluidisierte nicht-verfestigte Partikelmaterial nach unten hin aus dem Bauraum abgelassen wird, eine Beschädigung des jeweiligen Bauteils und/oder ein Zulegen einer oder mehrerer der obigen Partikelmaterial-Abfluss-Durchgangsöffnungen durch das Bauteil verhindert wird. D.h., nicht nur das Bauteil sondern auch dessen Stütz- oder Haltestruktur wird mittels des generativen Fertigungsverfahrens hergestellt.

Z.B. kann ein Bauteil mit Bauteil-Beinchen versehen werden, so dass sich das Bauteil mit seinen Beinchen an der Bauplattform abstützen kann bzw. sicher auf dieser landen kann.

Z.B. können bei dem generativen Fertigungsverfahren ferner ein oder mehrere Halterahmen mitausgebildet werden, an denen jeweils ein oder mehrere Bauteile über ihre jeweilige Stütz- oder Haltestruktur gehalten sind. Ein derartiger Halterahmen kann das Bauteil z.B. stoffschlüssig oder formschlüssig abstützen. Insofern wird auf die veröffentlichte deutsche Patentanmeldung DE 10 2007 033 434 A1 (→ Stoffschluss) verwiesen, sowie auf die deutsche Patentanmeldung mit der Anmeldenummer 10 2011 051 347.7, gemäß der ein mitausgebildeter Halterahmen und das jeweilige Bauteil miteinander eingreifen unter Ausbildung eines Ringspalts (z.B. kappenförmiger Spalt), in dem nicht-verfestigtes Partikelmaterial aufgenommen ist, so dass das Bauteil spielfrei an dem Halterahmen gehalten ist (d.h., das in dem Ringspalt aufgenommene Partikelmaterial verbleibt auch nach dem Entpacken des Bauteils in dem Ringspalt). Ein derartiger Halterahmen erleichtert das Entnehmen des Bauteils aus der Baubox, kann jedoch auch zu einem gesteuerten bzw. gezielten Absacken des Bauteils und/oder zu einem Schutz des Bauteils während des Entpackungsprozesses beitragen.

Z.B. können mehrere Bauteile über ihre jeweilige Stütz- oder Haltestruktur miteinander verbunden sein. Somit kann ein Aufeinanderfallen bzw. Gegeneinanderstoßen dieser Bauteile vermieden werden.

Das Bauteil bzw. eines oder mehrere oder alle der Bauteile können über ihre jeweilige Stütz- oder Haltestruktur mit der obigen Bauplattform verbunden sein und/oder sich an dieser abstützen.

Die vorliegende Erfindung stellt ferner eine Vorrichtung zur Verwendung in einem der obigen Verfahren bereit (eine sog. Entpackungs-Vorrichtung), wobei die Vorrichtung aufweist: eine Baubox mit einer vertikalen Umfangswandung, von der ein in dem Innenraum der Baubox angeordneter Bauraum umfangsseitig begrenzt ist, einer Bauplattform, welche den Bauraum nach unten hin begrenzt (die Bauplattform kann z.B. in der Baubox oder der Umfangswandung aufgenommen sein, z.B. höhenverstellbar; alternativ kann die Umfangswandung auf der Bauplattform angebracht sein und z.B. in dem Bauprozess mitausgebildet werden), wobei in der Bauplattform-ein oder mehrere Partikelmaterial-Abfluss-Durchgangsöffnungen zum Ablassen von fluidisiertem nicht-verfestigtem Partikelmaterial aus der Baubox heraus ausgebildet sind, und einem Schließmechanismus, der ausgebildet ist, um die ein oder mehreren Partikelmaterial-Abfluss-Durchgangsöffnungen wahlweise/selektiv zu verschließen und zu öffnen; eine Fließbett-Erzeugungsvorrichtung, die angepasst ist, um die das Bauteil umgebende Partikelmaterial-Schüttung in ein Fließbett zu überführen, so dass das lose, nicht-verfestigte Partikelmaterial fluidisiert wird und das fluidisierte nicht-verfestigte Partikelmaterial nach unten hin aus dem Bauraum heraus abgelassen werden kann, sowie eine Steuervorrichtung, welche derart eingerichtet (z.B. programmiert) ist, dass sie zum Entpacken des Bauteils die Fließbett-Erzeugungsvorrichtung derart steuert, dass diese die das Bauteil umgebende Partikelmaterial-Schüttung in ein Fließbett überführt, so dass das lose, nicht-verfestigte Partikelmaterial fluidisiert wird und das fluidisierte nicht-verfestigte Partikelmaterial nach unten hin aus dem Bauraum heraus abgelassen werden kann.

Die Steuervorrichtung kann z.B.. derart eingerichtet (z.B. programmiert) sein, dass sie zum Entpacken des Bauteils die Fließbett-Erzeugungsvorrichtung derart steuert, dass diese die das Bauteil umgebende Partikelmaterial-Schüttung in das Fließbett überführt und das Fließbett für eine vorbestimmte Zeitdauer aufrechterhält. Die Steuervorrichtung kann z.B. derart eingerichtet (z.B. programmiert) sein, dass sie zum Entpacken des Bauteils die Fließbett-Erzeugungsvorrichtung derart steuert, dass diese die das Bauteil umgebende Partikelmaterial-Schüttung insgesamt (z.B. an einem Stück oder intermittierend) für mindestens die Hälfte des gesamten Entpackungsvorgangs (bzw. der gesamten Entpackungszeitdauer) in das Fließbett überführt (z.B. größer gleich 70% der Zeitdauer, z.B. größer gleich 80% der Zeitdauer, z.B. größer gleich 90% der Zeitdauer).

Die Steuervorrichtung kann ferner derart eingerichtet (z.B. programmiert) sein, dass sie zum Entpacken des Bauteils den Schließmechanismus derart steuert, dass dieser die ein oder mehreren Partikelmaterial-Abfluss-Durchgangsöffnungen öffnet/freigibt, so dass das fluidisierte nicht-verfestigte Partikelmaterial nach unten hin aus dem Bauraum heraus abfließen kann, z.B. in einen unterhalb des Bauraums angeordneten Auffangbehälter hinein, in dem das von dem Bauteil abgetrennte nicht-verfestigte Partikelmaterial gesammelt wird. Das Freigeben der Partikelmaterial-Abfluss-Durchgangsöffnungen aus der (vorherigen) Schließstellung kann z.B. kurz vor, zeitgleich mit oder kurz nach der Fluidisierung der Partikelmaterial-Schüttung erfolgen, d.h. die Steuervorrichtung kann zuerst die Fließbett-Erzeugungsvorrichtung steuern, oder die Fließbett-Erzeugungsvorrichtung und den Schließmechanismus zeitgleich steuern, oder den Schließmechanismus zuerst steuern. Unter Umständen kann es von Vorteil sein, die Partikelmaterial-Abfluss-Durchgangsöffnungen erst freizugeben, wenn/nachdem das Partikelmaterial fluidisiert ist/wurde, da sich in diesem Fall der Schließmechanismus wegen des reduzierten Gewichts, das auf ihm lastet, leichter öffnen/handhaben lässt.

Zusätzlich oder alternativ können die ein oder mehreren Partikelmaterial-Abfluss-Durchgangsöffnungen z.B. Saugvorrichtungs-frei ausgebildet sein, so dass das fluidisierte nicht-verfestigte Partikelmaterial nach dem Öffnen der Partikelmaterial-Abfluss-Durchgangsöffnungen saugfrei durch die Partikelmaterial-Abfluss-Durchgangsöffnungen hindurch aus der Baubox abfließen kann. D.h., die Partikelmaterial-Abfluss-Durchgangsöffnungen sind gemäß dieser Ausführungsform nicht mit einer Vakuum-Erzeugungsvorrichtung bzw. nicht mit einer Saugvorrichtung fluidverbunden. Z.B. kann unterhalb der Baubox ein nach oben hin offener Partikelmaterial-Auffangbehälter vorgesehen sein, wobei das Partikelmaterial aus den Partikelmaterial-Abfluss-Durchgangsöffnungen heraus frei in den Auffangbehälter hinein rieselt (z.B. im freien Fall, z.B. lediglich in Folge der Schwerkraft, z.B. sind zwischen dem Partikelmaterial-Auffangbehälter und den Partikelmaterial-Abfluss-Durchgangsöffnungen keine Leitungen vorgesehen).

Zusätzlich oder alternativ kann die Innenseite der vertikalen Umfangswandung frei von Partikelmaterial-Abfluss-Durchgangsöffnungen ausgebildet sein, so dass das fluidisierte nicht-verfestigte Partikelmaterial zum Entpacken des Bauteils ausschließlich nach unten hin aus dem Bauraum abgelassen wird, z.B. in den unterhalb des Bauraums angeordneten Auffangbehälter hinein, in dem das von dem Bauteil abgetrennte nicht-verfestigte Partikelmaterial gesammelt wird. Ein aufwendiger und komplexer Schließmechanismus zum selektiven Verschließen von in der Umfangswandung ausgebildeten Auslass-Öffnungen kann somit entfallen.

Zusätzlich oder alternativ kann der Schließmechanismus wie oben für das Verfahren beschrieben ausgebildet sein (ein oder mehrere Drehteller oder Lochblech/Lochplatte oder Verschlüsse).

Die Fließbett-Erzeugungsvorrichtung kann einen von der Bauplattform ausgebildeten Wirbelboden aufweisen, von dem aus bzw. durch den hindurch die das Bauteil umgebende Partikelmaterial-Schüttung in ein Fließbett überführbar ist. Mit anderen Worten ist der Wirbelboden bzw. die Bauplattform angepasst, um die Partikelmaterial-Schüttung in ein Fließbett zu überführen, wozu der Wirbelboden sog. Fluidisierungsmittel aufweist. Hierzu kann der Wirbelboden z.B. aufweisen Fluid-Einblasdüsen und/oder Fluid-Einblas-Poren; siehe unten. Die Bauplattform dient also gleichzeitig dazu (bzw. ist entsprechend konfiguriert), Partikelmaterial dort hindurch abzulassen, und dazu, die Partikelmaterial-Schüttung zu fluidisieren bzw. zu verwirbeln. Die Bauplattform ist somit Bestandteil von sowohl dem Ablass-Mechanismus als auch dem Fluidisierungs-Mechanismus bzw. der Fließbett-Erzeugungsvorrichtung.

Die Fließbett-Erzeugungsvorrichtung weist eine Fluid-Einblasvorrichtung/Einleitvorrichtung auf, die angepasst ist, um zur Erzeugung des Fließbetts ein Fluid derart durch die Bauplattform hindurch von unten in die Partikelmaterial-Schüttung hinein einzublasen/einzuleiten, dass die Partikelmaterial-Schüttung von dem eingeblasenen/eingeleiteten Fluid von unten nach oben durchströmt wird und das lose, nicht-verfestigte Partikelmaterial mittels des eingeblasenen/eingeleiteten Fluids aufgelockert und unter Ausbildung einer Wirbelschicht fluidisiert wird.

Die Steuervorrichtung kann z.B. derart eingerichtet (z.B. programmiert) sein, dass sie zum Entpacken des Bauteils die Fließbett-Erzeugungsvorrichtung bzw. Fluid-Einblasvorrichtung/Einleitvorrichtung derart steuert, dass diese das Fluid mit einem solchen Druck oder einer solchen Strömungsgeschwindigkeit durch die Bauplattform hindurch von unten in die Partikelmaterial-Schüttung hinein einbläst/einleitet, dass die Partikelmaterial-Schüttung von dem eingeblasenen/eingeleiteten Fluid von unten nach oben durchströmt wird und das lose, nicht-verfestigte Partikelmaterial mittels des eingeblasenen/eingeleiteten Fluids aufgelockert und unter Ausbildung der Wirbelschicht fluidisiert wird. Mit anderen Worten kann in der Steuervorrichtung z.B. eine Druck- oder Strömungsgeschwindigkeit- oder Volumenstrom-Steuerung/Regelung für das dem Bauraum zuzuführende Fluid hinterlegt sein.

Die Fluid-Einblasvorrichtung kann z.B. eine Mehrzahl von Fluid-Einblasdüsen aufweisen, welche in die Bauplattform (bzw. den Wirbelboden) integriert sind und angepasst sind, um das Fluid durch die Bauplattform hindurch in die Partikelmaterial-Schüttung hinein einzuleiten.

Zusätzlich oder alternativ kann die Bauplattform (bzw. der Wirbelboden) unter teilweiser Ausbildung der Fluid-Einblasvorrichtung zumindest abschnittsweise porös ausgebildet sein, so dass das Fluid durch die Poren der Bauplattform hindurch in die Partikelmaterial-Schüttung hinein einleitbar ist. In diesem Fall kann unterhalb der Bauplattform eine Fluidkammer ausgebildet sein, in die das mit Druck beaufschlagte Fluid zugeführt wird und von der aus das Fluid durch die Poren der Bauplattform hindurch in die Partikelmaterial-Schüttung hinein eingeleitet wird.

Die Fluid-Einblasvorrichtung kann ferner (zusätzlich zu dem Wirbelboden bzw. den Fluid-Einblasdüsen und/oder Poren) z.B. eine Vorrichtung zum Beaufschlagen eines Fluids mit Druck ("Druckfluid-Quelle") aufweisen, z.B. einen Kompressor/Verdichter oder eine Pumpe oder einen Druckbehälter, der unter Druck stehendes Fluid aufnimmt. Ferner kann die Fluid-Einblasvorrichtung z.B. ein entsprechendes Leitungssystem aufweisen, das die DruckfluidQuelle mit dem Wirbelboden (bzw. den Fluid-Einblasdüsen und/oder den Poren) fluidverbindet und z.B. eine oder mehrere Armaturen (z.B. ein oder mehrere Ventile) enthalten kann.

Zusätzlich oder alternativ kann die Steuervorrichtung ferner eingerichtet sein, um die Fluid-Einblasvorrichtung derart zu steuern, dass diese das Fluid zum Entpacken des Bauteils stoßartig unter Erzeugung mehrerer zeitlich aufeinanderfolgender Fluidstöße von unten in die Partikelmaterial-Schüttung hinein einleitet, z.B. gepulst oder getaktet, um das Fluid aufzulockern und unter Ausbildung der Wirbelschicht zu fluidisieren. Hierdurch können Inhomogenitäten oder Unregelmäßigkeiten erzeugt werden.

Der Schließmechanismus kann derart ausgebildet sein, dass die Fluidisierungsmittel des Wirbelboden, z.B. die Fluid-Einblasdüsen und/oder die Poren, sowohl bei geöffneten als auch bei geschlossenen Partikelmaterial-Abfluss-Durchgangsöffnungen freigegeben sind. Die Bauplattform bzw. die Fluidisierungsmittel des Wirbelbodens können somit auch während des Bauprozesses eingesetzt werden, z.B. um ein Prozessgas in den Bauraum einzuleiten (dann jedoch mit einem geringeren Druck).

Weitere Merkmale und Vorteile der vorliegenden Erfindung sind ersichtlich aus oder im Detail dargelegt in der angehängten Zeichnung, welche hierin mitaufgenommen ist, sowie der folgenden detaillierten Beschreibung, welche zusammen dazu dienen, bestimmte Prinzipien der vorliegenden Erfindung zu erläutern.

Die Erfindung wird im Folgenden anhand verschiedener Ausführungsformen mit Bezugnahme auf die Zeichnung näher erläutert.

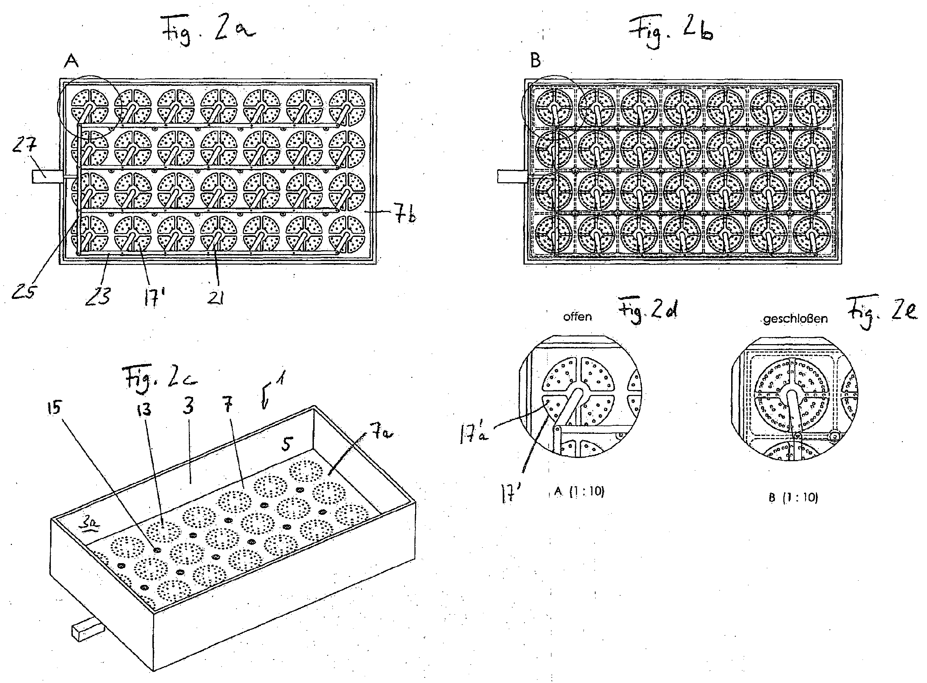

In der Zeichnung veranschaulichen die Figuren 1a und 1b in schematischer Form ein Verfahren und eine Vorrichtung zum Entpacken eines Bauteils gemäß einer ersten Ausführungsform der Erfindung, und die Figuren 2a bis 2e veranschaulichen in schematischer Form eine Vorrichtung zum Entpacken eines Bauteils gemäß einer zweiten Ausführungsform der Erfindung.

Die Figuren 3a und 3b zeigen in schematischer Form ein Verfahren und eine Vorrichtung zum Entpacken eines Bauteils gemäß einer dritten Ausführungsform der Erfindung, welche der ersten Ausführungsform der Erfindung ähnlich ist. Jedoch ist gemäß dieser Ausführungsform die den Schließmechanismus (mit)ausbildende Lochplatte (z.B. horizontal bewegbare "Schieberplatte") unterhalb der Bauplattform angeordnet.

Die Figuren 4a und 4b zeigen in schematischer Form ein Verfahren und eine Vorrichtung zum Entpacken eines Bauteils gemäß einer vierten Ausführungsform der Erfindung, bei der der Schließmechanismus eine zu der Anzahl von Durchgangsöffnungen der Bauplattform korrespondierende Anzahl von Verschlüssen, hier in Form von Stopfen, aufweist.

**Figur 1a** zeigt eine Baubox 1 mit einer vertikalen Seitenwand/Umfangswandung 3, von der umfangsseitig ein Bauraum 5 begrenzt wird, in dem ein oder mehrere Bauteile schichtweise mittels eines generativen Fertigungsverfahren aufgebaut werden können. Die Seitenwand 3 bzw. der Bauraum 5 kann in der Draufsicht z.B. rechteckig ausgebildet sein. Der Bauraum 5 bzw. die Baubox 1 ist nach oben hin offen. Der Bauraum kann während des erfindungsgemäßen Verfahrens zum Entpacken des Bauteils jedoch auch mit einer optionalen nicht-gezeigten Abdeckung nach oben hin verschlossen werden. Nach unten hin ist der Bauraum 5 durch eine in der Baubox 1 höhenverstellbar aufgenommene Bauplattform 7 begrenzt. Mit anderen Worten bildet die Bauplattform 7 den Boden des Bauraums 5 aus. In dem Bauraum 5 bzw. der Baubox 1 ist auf/oberhalb der Bauplattform 7 eine Partikelmaterial-Schüttung 9 aus losem, nicht-verfestigtem Partikelmaterial, hier losem Sand, aufgenommen. In der Partikelmaterial-Schüttung 9 sind mehrere Bauteile 11 eingebettet, hier beispielhaft zwei Gießkerne. Selbstverständlich kann auch lediglich ein Bauteil 11 in der Partikelmaterial-Schüttung 9 eingebettet sein.

Die Bauplattform 7 weist eine Mehrzahl von Partikelmaterial-Auslass/Abfluss-Durchgangsöffnungen 13 auf. Die Bauplattform 7 kann also als Lochplatte bezeichnet werden. Die Partikelmaterial-Abfluss-Durchgangsöffnungen 13 können z.B. in die Bauplattform 7 gebohrt sein. Die Partikelmaterial-Abfluss-Durchgangsöffnungen 13 sind derart dimensioniert, dass fluidisiertes nicht-verfestigtes Partikelmaterial durch die (geöffneten) Partikelmaterial-Abfluss-Durchgangsöffnungen 13 nach unten hin aus dem Bauraum 5 frei, insb. saugfrei, abfließen kann; siehe auch Figur 1b. Die Partikelmaterial-Abfluss-Durchgangsöffnungen 13 sind z.B. derart über die Bauplattform 7 hinweg verteilt, dass das fluidisierte Partikelmaterial gleichmäßig und zügig aus der Baubox 1 abfließen kann.

Gemäß dieser Ausführungsform der Erfindung wird das nicht-verfestigte Partikelmaterial weder ausgeblasen noch durch die Partikelmaterial-Abfluss-Durchgangsöffnungen 13 hindurch (oder an anderer Stelle) abgesaugt, sondern nicht-verfestigtes Partikelmaterial wird fluidisiert und fließt in dem fluidisierten Zustand oder Fließbett-Zustand lediglich Schwerkraft-bedingt und ohne zu Saugen bzw. ohne ein Vakuum an die Partikelmaterial-Auslass-Durchgangsöffnungen 13 anzulegen aus dem Bauraum 5 bzw. der Baubox 1 frei ab, insb. ausschließlich durch die Partikelmaterial-Abfluss-Durchgangsöffnungen 13. Aus diesem Grund ist die vertikale Seitenwand 3 des Bauraums 5 bzw. der Baubox 1 gemäß dieser Ausführungsform der Erfindung lochfrei ausgebildet.

Wie in **Figur 1b** angedeutet, kann unterhalb des Bauraums 5 bzw. der Baubox 1 ein nach oben hin offener Auffangbehälter 19, z.B. eine Auffangwanne, angeordnet werden, in den das nicht-verfestigte Partikelmaterial in Folge der Schwerkraft abfließt bzw. hinein rieselt (im freien Fall).

Die Bauplattform 7 dient hier also als Partikelmaterial-Abfluss-Boden, durch den fluidisiertes Partikelmaterial zum Entpacken des Bauteils durch die Partikelmaterial-Abfluss-Durchgangsöffnungen 13 hindurch abfließen kann.

Die Bauplattform 7 weist ferner eine Mehrzahl von Fluid-Einlassöffnungen auf. Die Fluid-Einlassöffnungen sind hier von Fluid-Einblasdüsen 15 gebildet, welche in der Bauplattform 7 aufgenommen sind bzw. in diese integriert sind. Z.B. sind die Fluid-Einblasdüsen 15 in entsprechende Durchgangslöcher, z.B. Durchgangsbohrungen, der Bauplattform 7 eingesetzt. Mit den Fluid-Einblasdüsen 15 kann z.B. Luft oder ein anderes Gas oder Gasgemisch durch die Bauplattform 7 hindurch von unten in die Partikelmaterial-Schüttung eingespeist werden, so dass die Partikelmaterial-Schüttung von dem Fluid von unten nach oben durchströmt und in der Folge davon in eine Wirbelschicht überführt wird. Die Auslassöffnungen der Fluid-Einblasdüsen 15 bzw. die davon geformten Fluid-Einlassöffnungen sind z.B. derart dimensioniert, dass die Partikel der Partikelmaterial-Schüttung nicht durch die Fluid-Einlassöffnungen hindurch nach unten hin aus dem Bauraum austreten können. An die die Fluid-Einblasdüsen 15 bzw. die in Figur 1a angedeuteten Druckluftanschlüsse wird zum Entpacken der beiden Bauteile 11 Druckluft angelegt, wobei der Druck oder die Strömungsgeschwindigkeit des an die Fluid-Einblasdüsen 15 bereitgestellten und in die Partikelmaterial-Schüttung einströmenden Luftstroms derart eingestellt/gesteuert/geregelt wird, dass die Partikelmaterial-Schüttung in ein Fließbett überführt und in dem fluidisierten Zustand gehalten wird. Hierzu können die Druckluftanschlüsse über ein nicht-gezeigtes Leitungssystem mit einer nicht-gezeigten Druckluft-Quelle, wie z.B. einem Kompressor/Verdichter, verbunden sein.

Die Bauplattform 7 dient hier also zusätzlich als sog. Wirbelboden, mit dem bzw. durch den hindurch das Partikelmaterial-Festbett in ein Partikelmaterial-Fließbett überführbar ist. Der Wirbelboden ist Bestandteil einer Fließbett-Erzeugungsvorrichtung, welche neben dem Wirbelboden bzw. den in die Bauplattform 7 integrierten Düsen 15 zusätzlich den oben-erwähnten Kompressor einschl. des Leitungssystems aufweisen kann. Die Fließbett-Erzeugungsvorrichtung kann ferner mit einer nicht-gezeigten Steuervorrichtung verbunden sein, welche derart eingerichtet ist, dass sie zum Entpacken der Bauteile 11, also im Entpackungsbetrieb, die Fließbett-Erzeugungsvorrichtung derart steuert, dass diese das Fluid, hier Luft, mit einem ausreichend hohen Druck in die Partikelmaterial-Schüttung einspeist, so dass diese in das Fließbett überführt wird.

Die Baubox 1 weist ferner einen Schließmechanismus zum wahlweisen/selektiven Schließen bzw. Öffnen der Auslass-Dürchgängsöffnüngen 13 auf. In Figur 1a werden die Auslass-Durchgangsöffnungen 13 der Bauplattform 7 von dem Schließmechanismus verschlossen, wohingegen die Auslass-Durchgangsöffnungen 13 der Bauplattform 7 in Figur 1b von dem Schließmechanismus freigegeben sind. Während des Fertigungsprozesses können die Abfluss-Durchgangsöffnungen 13 mittels des Schließmechanismus verschlossen werden, um das Partikelmaterial sukzessive schichtweise auf die Bauplattform aufzubringen.

Der Schließmechanismus weist gemäß dieser Ausführungsform der Erfindung ein Lochblech oder eine Lochplatte 17 auf, in der eine Mehrzahl von ersten Durchgangslöchern 17a sowie eine Mehrzahl von zweiten Durchgangslöchern 17b ausgebildet sind. Die Anzahl der ersten Durchgangslöcher 17a entspricht hier der Anzahl von Auslass-Durchgangsöffnungen 13 in der Bauplattform 7. Die Form und Größe der ersten Durchgangslöcher 17a kann im Wesentlichen gleich der Form und Größe der Auslass-Durchgangsöffnungen 13 sein. Die Anzahl der zweiten Durchgangslöcher 17b entspricht der Anzahl von Fluid-Einblasdüsen 15. Das jeweilige zweite Durchgangsloch 17b ist hier größer geformt als die der Partikelmaterial-Schüttung zugewandte Auslassseite/Auslassfläche der zugeordneten Fluid-Einblasdüse 15, so dass die Fluid-Einblasdüsen 15 sowohl in der Schließstellung (Figur 1a) als auch in der Öffnungsstellung (Figur 1b) des Schließmechanismus freigegeben sind, wodurch die Düsen 15 auch während des Bauprozesses und vor dem Öffnen der Abfluss-Durchgangsöffnungen 13 eingesetzt/genutzt werden können.

Zum selektiven Schließen/Öffnen der Abfluss-Durchgangsöffnungen 13 wird die Lochplatte 17 horizontal bewegt. In der Öffnungsposition (oder Ablassposition) fluchten die Auslass-Durchgangsöffnungen 13 der Bauplattform 7 dabei mit den ersten Durchgangslöchern 17a, so dass Baumaterial bzw. Partikelmaterial aus dem Bauraum abrieseln kann. In der Schließposition (oder Bauposition) sind die Auslass-Durchgangsöffnungen 13 hingegen von der Lochplatte 7 verdeckt. Wie aus den Figuren 1a und 1b ersichtlich, sind die Düsen 15 stets von der Lochplatte 17 freigegeben.

Die oben-erwähnte nicht-gezeigte Steuervorrichtung kann zusätzlich mit dem Schließmechanismus in Verbindung stehen, um den Schließmechanismus derart zu steuern, dass dieser die Abfluss-Durchgangsöffnungen 13 durch horizontales Bewegen der Lochplatte 17 öffnet/freigibt, um das Partikelmaterial ausrieseln zu lassen, sobald die Schüttung 9 als Wirbelschicht vorliegt.

Im Folgenden wird der Betrieb der in den Figuren 1a und 1b gezeigten Baubox/Vorrichtung bzw. das Entpackungs-Verfahren gemäß dieser Ausführungsform der Erfindung genauer beschrieben. Nach dem Aufbauen der beiden Bauteile 11 liegen diese wie in Figur 1 gezeigt zusammen mit der Partikelmaterial-Schüttung 9 aus losem, nicht-verfestigtem Partikelmaterial und von dieser umgeben in dem Bauraum 5 vor.

Zum Entpacken der Bauteile 11 wird die Partikelmaterial-Schüttung 9 nun zunächst in ein Partikelmaterial-Fließbett überführt, so dass das lose, nicht-verfestigte Partikelmaterial fluidisiert vorliegt, und in diesem Fließbett-Zustand gehalten. Das fluidisierte nicht-verfestigte Partikelmaterial wird dann nach unten hin aus dem Bauraum 5 heraus abgelassen (in dem Fließbett-Zustand), und zwar durch die Bauplattform 7 bzw. deren Partikelmaterial-Abfluss-Durchgangsöffnungen 13 hindurch; siehe Figur 1b.

Hierzu werden die Partikelmaterial-Abfluss-Durchgangsöffnungen 13 nach dem Ausbilden der Wirbelschicht bzw. des Fließbetts zum Ablassen des fluidisierten nicht-verfestigten Partikelmaterials mittels des Schließmechanismus geöffnet, wozu das Lochblech 17 horizontal von der Schließposition aus Figur in die Öffnungsposition von Figur 1b bewegt wird, so dass das fluidisierte nicht-verfestigte Partikelmaterial durch die ein oder mehreren Partikelmaterial-Abfluss-Durchgangsöffnungen 13 hindurch nach unten hin in den Auffangbehälter 19 hinein abfließt.

Wie in Figur 1b gezeigt, fließt das fluidisierte nicht-verfestigte Partikelmaterial dabei saugfrei nach unten hin aus dem Bauraum 5 ab. Ferner wird das fluidisierte nicht-verfestigte Partikelmaterial gemäß dieser Ausführungsform ausschließlich nach unten hin aus dem Bauraum 5 abgelassen.

Zur Erzeugung des Fließbetts wird ein Fluid, hier Luft, unter Verwendung der Düsen 15 derart von unten in die Partikelmaterial-Schüttung 9 hinein eingeleitet, dass die Partikelmaterial-Schüttung 9 von dem Fluid von unten nach oben durchströmt wird und das lose, nicht-verfestigte Partikelmaterial mittels des Fluids aufgelockert und unter Ausbildung einer Wirbelschicht fluidisiert wird. Dabei wird gemäß dieser Ausführungsform der Druck des Fluids derart gesteuert oder geregelt, dass das Partikelmaterial von dem Fluid in die Wirbelschicht überführt wird. Mit abnehmender Menge oder Höhe der Partikelmaterial-Wirbelschicht in dem Bauraum 5 kann es zweckmäßig sein, den Druck zu reduzieren, um ein Austragen des Partikelmaterials nach oben zu vermeiden.

Ferner wird gemäß dieser Ausführungsform das Fluid stoßartig unter Erzeugung mehrerer zeitlich aufeinanderfolgender Fluidstöße von unten in die Partikelmaterial-Schüttung 9 hinein eingeleitet, z.B. gepulst oder getaktet, um hierdurch Inhomogenitäten zu erzeugen.

Die Bauteile werden gemäß dieser Ausführungsform der Erfindung bei dem Fertigungsverfahren derart aufgebaut bzw. in dem Bauraum angeordnet, dass durch das spätere Entpacken bzw. Ablassen des fluidisierten Partikelmaterials keine Beschädigung der Bauteile erfolgt/auftritt und dass die Ablass-Durchgangsöffnungen 13 zumindest nicht vollständig von den absinkenden Bauteilen 11 zugelegt werden.

Gemäß dem gezeigten Verfahren sind dabei sämtliche Bauteile 11 in horizontaler Richtung gesehen nebeneinander in einer einzigen Bauteil-Lage hergestellt/angeordnet (siehe Figur 1a), so dass ein Absacken eines Bauteils auf ein anderes und eine daraus resultierende Beschädigung vermieden werden kann.

Falls erforderlich kann mindestens eines der Bauteile 11 eine jeweilige (nicht-gezeigte) Stütz- oder Haltestruktur aufweisen, die bei dem generativen Fertigungsverfahren zusammen mit dem jeweiligen Bauteil 11 mitausgebildet wird, wodurch beim Entpacken der Bauteile 11, wenn das fluidisierte nicht-verfestigte Partikelmaterial nach unten hin aus dem Bauraum 5 abgelassen wird, eine Beschädigung des jeweiligen Bauteils 11 und/oder ein Zulegen einer oder mehrerer Partikelmaterial-Abfluss-Durchgangsöffnungen 13 durch das Bauteil verhindert werden kann.

Eine derartige Stütz- oder Haltestruktur kann z.B. Beinchen umfassen, mit denen sich das Bauteil 11 auf der Bauplattform 7 bzw. dem Lochblech 17 abstützen kann (zumindest im abgesunkenen Zustand). Die Beinchen können also als Abstandshalter zu der Bauplattform 7 bzw. dem Schließmechanismus dienen.

Alternativ oder zusätzlich können bei dem generativen Fertigungsverfahren ferner ein oder mehrere Halterahmen mitausgebildet werden, an denen jeweils ein oder mehrere Bauteile über ihre jeweilige Stütz- oder Haltestruktur gehalten sind.

Alternativ oder zusätzlich können mehrere Bauteile 11 über ihre jeweilige Stütz- oder Haltestruktur miteinander verbunden sein, um die Bauteile 11 so auf Abstand zueinander zu halten.

Alternativ oder zusätzlich kann zumindest ein Bauteil 11 über seine Stütz- oder Haltestruktur mit der Bauplattform 7 oder dem Schließmechanismus verbunden sein bzw. sich an dieser/diesem abstützen (z.B. bereits vor dem Entpacken).

- In der in den Figuren 1a und 1b gezeigten Ausführungsform ist die Lochplatte 17 oberhalb der Bauplattform angeordnet. Dies hat z.B. den Vorteil, dass das Partikelmaterial während des Bauprozesses auf die Lochplatte (bzw. horizontal bewegbare "Schieberplatte") drückt und so dazu beiträgt, die Platte gegen die Bauplattform abzudichten. Ferner sind beim Start des Bauprozesses nur die Öffnungen der (dünneren) Lochplatte/Schieberplatte und nicht die Durchgangsöffnungen 13 der (dickeren) Bauplattform zu füllen.

Jedoch kann die Lochplatte 17 alternativ - wie in den **Figuren 3a und 3b** gezeigt - auch unterhalb der Bauplattform angeordnet werden. Dies hat z.B. den Vorteil, dass während der Bewegung der Lochplatte/Schieberplatte zum Ablassen des Partikelmaterials keine unmittelbaren Kräfte auf Bauteile nahe der Schieberplatte wirken. Zwischen Lochplatte 17 und Bauplattform 7 kann dabei in Figur 3a ein Spalt ausgebildet sein, d.h. die Lochplatte muss nicht unmittelbar an der Bauplattform anliegen, wobei sich das Pulvermaterial auf der Lochplatte bzw. in dem Spalt totläuft ohne aus den Öffnungen der Lochplatte zu rieseln.

In den beiden genannten Fällen (horizontale Schieberplatte oben oder unten) kann die Schieberplatte z.B. mittels eines ankoppelbaren Antriebs (z.B. Stellmotor oder Hubmagnet) in der Horizontalen bewegt werden, um die Löcher 17a und 13 in die fluchtende Position zu bringen bzw. um die Löcher 13 mit der Lochplatte 17 zu verschließen.

Ist die Lochplatte 17 unterhalb der Bauplattform 7 angeordnet, so kann die Lochplatte zusätzlich oder alternativ vertikal bewegbar ausgebildet sein. Die Löcher 17a und 13 können dann so angeordnet sein, dass sie zu keinem Zeitpunkt fluchten, wobei die Löcher 17a bzw. die Lochplatte 17 in der Öffnungs-Position in vertikaler Richtung weiter von den Löchern 13 bzw. der Lochplatte-entfernt sind/ist-als in der Schließ-Position, so dass sich ein jeweiliger Schüttkegel in der Schrießposition vor dem zugeordneten Loch 17a totläuft und in der Öffnungsposition das zugeordnete Loch 17a erreicht, so dass das Pulvermaterial durch die Löcher 13 und 17a rieselt.

Gemäß einer (nicht-gezeigten) alternativen Ausführungsform können die Fluid-Einblasdüsen 15 ganz oder teilweise durch Fluid-Einblasporen (im Folgenden "Poren") ersetzt werden, welche sich in Dickenrichtung durch die Bauplattform 2 hindurch erstrecken. Das Fluid wird dann durch die Poren hindurch in die Partikelmaterial-Schüttung 9 hinein eingeleitet. Hierzu können z.B. mehrere poröse Einsätze in entsprechende Löcher oder Bohrungen der Bauplattform 7 eingesetzt werden, oder die gesamte Bauplattform kann von einer porösen Platte gebildet sein. Die porösen Einsätze oder die poröse Platte können z.B. poröse Sintereinsätze bzw. eine poröse Sinterplatte sein.

Es sind auch Kombinationen der obigen alternativen Ausführungsformen denkbar, d.h. z.B. eine Bauplattform mit Fluid-Einblasdüsen und/oder Fluid-Einblasporen.

Die **Figuren 2a bis 2e** zeigen eine Vorrichtung zum Entpacken eines mittels eines generativen Fertigungsverfahrens hergestellten Bauteils gemäß einer zweiten Ausführungsform der Erfindung. Gleiche oder äquivalente Merkmale sind dabei mit denselben Bezugszeichen wie in den Figuren 1a und 1b versehen. Im Folgenden werden primär die Unterschiede zu der ersten Ausführungsform der Erfindung beschrieben.

Die Vorrichtung weist eine Baubox 1 auf. Die Baubox 1 hat eine vertikale Umfangswandung 3, von der ein in dem Innenraum der Baubox 1 angeordneter Bauraum 5 umfangsseitig begrenzt ist, eine Bauplattform 7, welche den Bauraum 5 nach unten hin begrenzt und höhenverstellbar in der Baubox 1 bzw. der Umfangswandung 3 aufgenommen ist, wobei in der Bauplattform 7 mehrere Partikelmaterial-Abfluss-Durchgangsöffnungen 13 zum Ablassen von fluidisiertem nicht-verfestigtem Partikelmaterial - aus der Baubox 1 heraus ausgebildet sind, und einen Schließmechanismus, der ausgebildet ist, um die Partikelmaterial-Abfluss-Durchgangsöffnungen 13 wahlweise zu verschließen und zu öffnen.

In der Baubox 1 kann mittels eines generativen Fertigungsverfahrens zumindest ein Bauteil aufgebaut werden, das nach seiner Herstellung von einer Partikelmaterial-Schüttung aus nicht verfestigtem Partikelmaterial umgeben ist (wie in den Figuren und 1b gezeigt). Das Partikelmaterial kann nach seiner Fluidisierung durch die Partikelmaterial-Abfluss-Durchgangsöffnungen 13 hindurch aus der Baubox abgelassen werden, zumindest in einem solchen Ausmaß, dass die gefertigten Bauteile für ein Ergreifen und Entnehmen aus der Baubox 1 ausreichend freigelegt sind. Die Partikelmaterial-Abfluss-Durchgangsöffnungen 13 sind gemäß dieser Ausführungsform zu Gruppen von Partikelmaterial-Abfluss-Durchgangsöffnungen 13 zusammengefasst. Siehe Figur 2c, die eine Draufsicht auf die Bauplattform-Oberseite 7a zeigt, sowie Figur 2a, die eine Draufsicht auf die Bauplattform-Unterseite 7b zeigt. Insgesamt sind gemäß dieser Ausführungsform 28 Gruppen von Partikelmaterial-Abfluss-Durchgangsöffnungen 13 vorgesehen. In der jeweiligen Gruppe sind die Partikelmaterial-Abfluss-Durchgangsöffnungen 13 kreisförmig angeordnet. Die Gruppen von Partikelmaterial-Abfluss-Durchgangsöffnungen 13 sind gleichmäßig über die Bauplattform 7 hinweg verteilt.

Der Schließmechanismus weist gemäß dieser Ausführungsform der Erfindung mehrere Drehteller 17' auf, hier 28 Drehteller entsprechend der Anzahl der Gruppen von Partikelmaterial-Abfluss-Durchgangsöffnungen 13. Die Drehteller 17` sind in den Figuren 2a, 2b, 2d und 2e gut zu erkennen. Die Drehteller 17' sind drehbar an der Unterseite 7b der Bauplattform 7 aufgehängt und jeweils zwischen einer ersten Drehposition - (siehe Figuren 2a und 2d) und einer zweiten Drehposition (siehe Figuren 2b und 2e) hin und her drehbewegbar. Der jeweilige Drehteller 17` weist eine Mehrzahl von Durchgangslöchern 17a' auf, welche in der ersten Drehposition mit einer Mehrzahl von zugeordneten Partikelmaterial-Abfluss-Durchgangsöffnungen 13 der zugeordneten Gruppe von Partikelmaterial-Abfluss-Durchgangsöffnungen 13 fluchten und welche in der zweiten Drehposition von der Bauplattform 7 verdeckt sind (d.h. nicht mit den zugeordneten Partikelmaterial-Abfluss-Durchgangsöffnungen 13 der zugeordneten Gruppe fluchten), so dass die Partikelmaterial-Abfluss-Durchgangsöffnungen 13 von dem zugeordneten Drehteller 17' verschlossen sind.

Die Drehteller 17' können also von der zweiten Drehposition in die erste Drehposition gedreht werden, um die Partikelmaterial-Abfluss-Durchgangsöffnungen 13 zu öffnen und das fluidisierte nicht-verfestigte Partikelmaterial durch die Partikelmaterial-Abfluss-Durchgangsöffnungen 13 sowie die Durchgangslöcher 17a` hindurch nach unten abfließen zu lassen. Die Drehteller sind miteinander mechanisch gekoppelt und gemeinsam/gleichzeitig zwischen der ersten und der zweiten Position hin und her bewegbar. Hierzu können mehrere Drehteller 17a' bzw. eine Reihe von hintereinander angeordneten Drehtellern 17a' über eine Schub/Zug-Stange 23 miteinander gekoppelt sein, z.B. indem ein jeweiliger Verbindungs-Arm 21 sowohl an dem zugeordneten Drehteller 17' als auch an der Stange 23 angelenkt ist. Da hier vier Reihen von Drehtellern 17' vorgesehen sind, sind vier Schub/ZugStangen 23 vorgesehen, die wiederum über einen Querverbinder bzw. eine Querstange 25 gelenkig miteinander gekoppelt sind. Die Querstange 25 wird von einem Linearantrieb 27 angetrieben, so dass der Linearantrieb über die Querstange 25, die Schub/Zug-Stangen 23 und den jeweiligen Verbindungs-Arm 21 die miteinander gekoppelten Drehteller gemeinsam/gleichzeitig zwischen der ersten und der zweiten Drehposition hin und her bewegt. Die Drehteller sind hier nach unten hin von einem optionalen Verstärkungsblech abgestützt, in welchem für jeden Drehteller vier Schlitze ausgebildet sind, welche entlang eines Kreisbogens angeordnet sind und die Öffnungen 17a' zumindest größtenteils freilegen.

Die Entpackungs-Vorrichtung weist ferner eine Fließbett-Erzeugungsvorrichtung auf, die angepasst ist, um die das Bauteil umgebende Partikelmaterial-Schüttung in ein Fließbett zu überführen, so dass das lose, nicht-verfestigte Partikelmaterial fluidisiert wird und das fluidisierte nicht-verfestigte Partikelmaterial nach unten hin aus dem Bauraum heraus abgelassen werden kann. Die Fließbett-Erzeugungsvorrichtung weist hier, analog der ersten Ausführungsform, eine Fluid-Einblasvorrichtung auf, die angepasst ist, um zur Erzeugung des Fließbetts ein Fluid derart durch die Bauplattform hindurch von unten in die Partikelmaterial-Schüttung hinein einzublasen, dass die Partikelmaterial-Schüttung von dem eingeblasenen Fluid von unten nach oben durchströmt wird und das lose, nicht-verfestigte Partikelmaterial mittels des eingeblasenen Fluids aufgelockert und unter Ausbildung einer Wirbelschicht fluidisiert wird. Die Fluid-Einblasvorrichtung weist hier wie in der ersten Ausführungsform eine Mehrzahl von Fluid-Einblasdüsen 15 auf, welche in die Bauplattform 7 integriert sind und angepasst sind, um das Fluid durch die Bauplattform 7 hindurch in die Partikelmaterial-Schüttung hinein einzuleiten. Die Düsen sind zwischen den Gruppen von Abfluss-Durchgangsöffnungen 13 angeordnet, bzw. zwischen den Drehtellern 17`. Die Bauplattform ist also erneut als Wirbelboden ausgebildet. Alternativ kann die Bauplattform 7 unter teilweiser Ausbildung der Fluid-Einblasvorrichtung zumindest abschnittsweise porös ausgebildet sein, so dass Fluid durch die Poren der Bauplattform hindurch in die Partikelmaterial-Schüttung hinein eingeleitet werden kann.

Die Fluid-Einblasvorrichtung kann analog der ersten Ausführungsform ferner eine Druckluft-Quelle und ein entsprechendes Leitungssystem zum Zuführen der Druckluft an die Düsen 15 aufweisen.

Die Entpackungs-Vorrichtung weist ferner eine (nicht-gezeigte) Steuervorrichtung auf, welche derart eingerichtet ist, dass sie zum Entpacken des Bauteils die Fluid-Einblasvorrichtung derart steuert, dass diese die das Bauteil umgebende Partikelmaterial-Schüttung in ein Fließbett überführt, so dass das lose, nicht-verfestigte Partikelmaterial fluidisiert wird und das fluidisierte nicht-verfestigte Partikelmaterial nach unten hin aus dem Bauraum heraus abgelassen werden kann. Z.B. kann die Steuervorrichtung eingerichtet sein, um die Fluid-Einblasvorrichtung derart zu steuern, dass diese das Fluid mit einem vorbestimmten Druck oder einer vorbestimmten Strömungsgeschwindigkeit in den Bauraum hinein einspeist/einleitet. Die Steuervorrichtung kann dabei insb. derart eingerichtet sein, dass sie die Fluid-Einblasvorrichtung steuert, so dass diese das Fluid stoßartig unter Erzeugung mehrerer zeitlich aufeinanderfolgender Fluidstöße von unten in die Partikelmaterial-Schüttung hinein einleitet, z.B. gepulst oder getaktet.

Die Steuervorrichtung kann ferner derart eingerichtet sein, dass sie zum Entpacken des Bauteils den Schließmechanismus derart steuert, dass dieser die Partikelmaterial-Abfluss-Durchgangsöffnungen 13 öffnet, so dass das fluidisierte nicht-verfestigte Partikelmaterial nach unten hin aus dem Bauraum 5 heraus abfließen kann. D.h., der Linearantrieb 27 kann von der Steuervorrichtung gesteuert werden.

Auch gemäß dieser Ausführungsform sind die Partikelmaterial-Abfluss-Durchgangsöffnungen 13 Saugvorrichtungs-frei ausgebildet, so dass das fluidisierte nicht-verfestigte Partikelmaterial nach dem Öffnen der Partikelmaterial-Abfluss-Durchgangsöffnungen 13 saugfrei durch die Partikelmaterial-Abfluss-Durchgangsöffnungen 13 hindurch aus der Baubox 5 abfließt, z.B. in einen unterhalb des Bauraums 5 angeordneten Auffangbehälter 19 (wie in Figur 1b für die erste Ausführungsform gezeigt). Auch gemäß dieser Ausführungsform ist die Innenseite 3a der vertikalen Umfangswandung 3 frei von Partikelmaterial-Abfluss-Durchgangsöffnungen 13 ausgebildet, so dass das fluidisierte nicht-verfestigte Partikelmaterial zum Entpacken des Bauteils ausschließlich nach unten hin aus dem Bauraum 5 abgelassen wird. Auch gemäß dieser Ausführungsform ist der Schließmechanismus derart ausgebildet, dass die Fluid-Einblasdüsen 15 sowohl bei geöffneten als auch bei geschlossenen Partikelmaterial-Abfluss-Durchgangsöffnungen 13 freigegeben sind.

Die **Figuren 4a und 4b** zeigen in schematischer Form einen weiteren Schließmechanismus. Gemäß dieser Ausführungsform der Erfindung hat der Schließmechanismus eine zu der Anzahl von Durchgangsöffnungen 13 der Bauplattform 7 korrespondierende Anzahl von Verschlüssen, hier in Form von Stopfen 17", die unterhalb der Bauplattform angeordnet sind. Die Stopfen 17" sind ausgebildet, um eine jeweils zugeordnete Partikelmaterial-Abfluss-Durchgangsöffnung 13 selektiv zu verschließen (siehe Figur 4a) und freizugeben (siehe Figur 4b), und sind relativ zu der Bauplattform 7 zwischen einer Schließ-Position, in der der jeweilige Stopfen 17" in der zugeordneten Partikelmaterial-Abfluss-Durchgangsöffnung aufgenommen ist, und einer Öffnungs-Position, in der der jeweilige Verschluss nach unten hin aus der zugeordneten Partikelmaterial-Abfluss-Durchgangsöffnung 13 heraus bewegt ist und diese freigibt, vertikal hin und her bewegbar. Die Stopfen 17" werden relativ zu der Bauplattform 7 aus der Schließ-Position in die Öffnungs-Position bewegt, um das fluidisierte nicht-verfestigte Partikelmaterial durch die Partikelmaterial-Abfluss-Durchgangsöffnungen 13 hindurch nach unten abfließen zu lassen. Die Stopfen sind hier gemeinsam aus der Schließ-Position in die Öffnungs-Position hin und her bewegbar, indem sie mechanisch miteinander verbunden/gekoppelt sind, hier über ein Gestänge oder eine Platte 18. Die Stöpsel 17" können in der Schließ-Position direkt gegen zumindest einen Teil der jeweiligen Lochumfangswandung abdichten (bzw. an dieser anliegen) oder alternativ einen Ringspalt gegenüber dieser ausbilden, der klein genug ist, um ein Abfließen des Partikelmaterials zu verhindern (z.B. weil der Ringspalt kein Partikelmaterial durchlässt oder weil der Ringspalt mit Partikelmaterial zugelegt wird bzw. verstopft oder weil der Ringspalt zur Ausbildung eines Schüttkegels führt/beiträgt, der sich unterhalb der Bauplattform bildet und ein (weiteres) Abfließen des Partikelmaterials verhindert). Wie in den Figuren 4a und 4b gezeigt, können die Partikelmaterial-Abfluss-Durchgangsöffnungen 13 gemäß dieser Ausführungsform konusförmig ausgestaltet sein, wobei sich die jeweilige Öffnung nach oben hin verjüngt. Dabei kann der jeweilige Stöpsel z.B. ebenfalls konusförmnig ausgebildet sein, z.B. konträr zu dem zugeordneten Loch 13. Z.B. kann der jeweilige Stopfen aus Gummi hergestellt sein.

In einer alternativen, nicht gezeigten Ausführungsform können die Verschlüsse z.B. als Teller oder Deckel ausgebildet sein, die anstelle der Stopfen unterhalb oder oberhalb der Bauplattform 7 angeordnet sind und in der Schließ-Position die Löcher 13 verdecken und dadurch ein Abfließen des Partikelmaterials verhindern.

Die vorhergehende Beschreibung von spezifischen beispielhaften Ausführungsformen wurde präsentiert zum Zwecke der Illustration und Beschreibung. Sie soll nicht erschöpfend sein oder die Erfindung auf die offenbarten genauen Formen einschränken. Der Schutzumfang wird durch die hieran angehängten Ansprüche definiert.

## Patentansprüche

1. Verfahren zum Entpacken eines mittels eines generativen Fertigungsverfahrens hergestellten Bauteils (11) aus einer Partikelmaterial-Schüttung (9) aus losem, nicht-verfestigtem Partikelmaterial, welche gemeinsam mit dem Bauteil (11) in einem Bauraum (5) angeordnet ist und das Bauteil (11) umgibt, wobei der Bauraum (5) nach unten hin von einer Bauplattform (7) begrenzt wird, auf der die das Bauteil (11) enthaltende Partikelmaterial-Schüttung (9) angeordnet ist,
wobei zum Entpacken des Bauteils (11) die das Bauteil (11) umgebende Partikelmaterial-Schüttung (9) in ein Fließbett überführt wird, so dass das lose, nicht-verfestigte Partikelmaterial fluidisiert vorliegt, und das fluidisierte nicht-verfestigte Partikelmaterial durch die Bauplattform (7) hindurch nach unten hin aus dem Bauraum (5) heraus abgelassen wird,
wobei zur Erzeugung des Fließbetts ein Fluid durch die Bauplattform (7) hindurch derart von unten in die Partikelmaterial-Schüttung (9) hinein eingeleitet wird, dass die Partikelmaterial-Schüttung (9) von dem Fluid von unten nach oben durchströmt wird und das lose, nicht-verfestigte Partikelmaterial mittels des Fluids aufgelockert und unter Ausbildung einer Wirbelschicht fluidisiert wird, und
wobei in der Bauplattform (7) ein oder mehrere Partikelmaterial-Abfluss-Durchgangsöffnungen (13) ausgebildet sind, welche mittels eines Schließmechanismus (17, 17', 17") wahlweise schließbar sind und geöffnet werden können, und wobei die ein oder mehreren Partikelmaterial-Abfluss-Durchgangsöffnungen (13) zum Ablassen des fluidisierten nicht-verfestigten Partikelmateriäls mittels des Schließmechanismus geöffnet werden, so dass das fluidisierte nicht-verfestigte Partikelmaterial durch die ein oder mehreren Partikelmaterial-Abfluss-Durchgangsöffnungen (13) hindurch nach unten hin abfließt.

2. Verfahren nach Anspruch 1, wobei der Schließmechanismus ein Lochblech oder eine Lochplatte (17) aufweist, welche(s) im Wesentlichen parallel zu der Bauplattform (7) angeordnet ist, eine oder mehrere Durchgangslöcher (17a) aufweist und relativ zu der Bauplattform (7) zwischen einer Schließ-Position und einer Öffnungs-Position hin und her bewegbar ist, z.B. horizontal und/oder vertikal verschiebbar, wobei das Lochblech oder die Lochplatte (17) relativ zu der Bauplattform (7) in die Öffnungs-Position bewegt wird, um das fluidisierte nicht-verfestigte Partikelmaterial durch die ein oder mehreren Partikelmaterial-Abfluss-Durchgangsöffnungen (13) hindurch nach unten abfließen zu lassen.

3. Verfahren nach Anspruch 1, wobei der Schließmechanismus ein oder mehrere Drehteller (17`) aufweist, welche drehbar an der Unterseite (7b) der Bauplattform (7) angeordnet sind, jeweils zwischen einer ersten Drehposition und einer zweiten Drehposition hin und her drehbewegbar sind und jeweils eine Mehrzahl von Durchgangslöchern (17a') aufweisen, welche in der ersten Drehposition mit einer Mehrzahl von zugeordneten Partikelmaterial-Abfluss-Durchgangsöffnungen (13) fluchten und welche in der zweiten Drehposition von der Bauplattform (7) verdeckt sind, so dass die zugeordneten Partikelmaterial-Abfluss-Durchgangsöffnungen (13) verschlossen sind, wobei die ein oder mehreren Drehteller (17`) von der zweiten Drehposition in die erste Drehposition gedreht werden, um die Partikelmaterial-Abfluss-Durchgangsöffnungen (13) zu öffnen und das fluidisierte nicht-verfestigte Partikelmaterial durch die Partikelmaterial-Abfluss-Durchgangsöffnungen (13) sowie die Durchgangslöcher (17a') hindurch nach unten abfließen zu lassen.

4. Verfahren nach Anspruch 1, wobei der Schließmechanismus eine zu der Anzahl von Partikelmaterial-Abfluss-Durchgangsöffnungen (13) korrespondierende Anzahl von Verschlüssen, z.B. in Form von Stopfen (17"), aufweist, die ausgebildet sind, um eine jeweils zugeordnete Partikelmaterial-Abfluss-Durchgangsöffnung (13) selektiv zu verschließen und freizugeben, und die relativ zu der Bauplattform (7) zwischen einer Schließ-Position, in der der jeweilige Verschluss die zugeordnete Partikelmaterial-Abfluss-Durchgangsöffnung (13) verschließt, und einer Öffnungs-Position, in der der jeweilige Verschluss die zugeordnete Partikelmaterial-Abfluss-Durchgangsöffnung (13) freigibt, vertikal und/oder horizontal hin und her bewegbar sind, wobei die Verschlüsse relativ zu der Bauplattform (7) aus der Schließ-Position in die Öffnungs-Position bewegt werden, um das fluidisierte nicht-verfestigte Partikelmaterial durch die ein oder mehreren Partikelmaterial-Abfluss-Durchgangsöffnungen (13) hindurch nach unten abfließen zu lassen.

5. Verfahren nach einem der vorangehenden Ansprüche, wobei das fluidisierte nicht-verfestigte Partikelmaterial saugfrei durch die Bauplattform bzw. die Partikelmaterial-Abfluss-Durchgangsöffnungen (13) hindurch nach unten hin aus dem Bauraum (5) abfließt, z.B. in einen unterhalb des Bauraums (5) angeordneten Auffangbehälter (19), in dem das von dem Bauteil (11) abgetrennte nicht-verfestigte Partikelmaterial gesammelt wird, und/oder
wobei das fluidisierte nicht-verfestigte Partikelmaterial zum Entpacken des Bauteils (11) überwiegend oder ausschließlich durch die Bauplattform bzw. die Partikelmaterial-Abfluss-Durchgangsöffnungen (13) hindurch nach unten hin aus dem Bauraum (5) abgelassen wird, z.B. in einen unterhalb des Bauraums (5) angeordneten Auffangbehälter (19), in dem das von dem Bauteil (11) abgetrennte nicht-verfestigte Partikelmaterial gesammelt wird.

6. Verfahren nach einem der vorangehenden Ansprüche, wobei die Bauplattform (7) eine Mehrzahl von Fluid-Einlassöffnungen aufweist, durch die das Fluid von der Bauplattform aus in die Partikelmaterial-Schüttung (9) eingeleitet wird, und/oder wobei die Bauplattform (7) eine Mehrzahl von Fluid-Einleitdüsen (15) aufweist, mittels derer das Fluid in die Partikelmaterial-Schüttung (9) hinein eingeleitet wird, und/oder
wobei die Bauplattform (7) zumindest abschnittsweise porös ausgebildet ist und das Fluid durch die Poren der Bauplattform (7) hindurch in die Partikelmaterial-Schüttung (9) hinein eingeleitet wird.

7. Verfahren nach einem der vorangehenden Ansprüche, wobei das Fluid stoßartig unter Erzeugung mehrerer zeitlich aufeinanderfolgender Fluidstöße von unten in die Partikelmaterial-Schüttung (9) hinein eingeleitet wird, z.B. gepulst oder getaktet, um das Fluid aufzulockern und unter Ausbildung der Wirbelschicht zu fluidisieren.

8. Verfahren nach einem der Ansprüche 6 bis 7, wobei die Fluid-Einleitdüsen (15) und/oder zumindest ein überwiegender Teil der Poren von dem Schließmechanismus sowohl bei geöffneten als auch bei geschlossenen Partikelmaterial-Abfluss-Durchgangsöffnungen (13) freigegeben sind.

9. Verfahren zum Herstellen eines oder mehrerer Bauteile (11) mittels eines generativen Fertigungsverfahrens in Kombination mit einem Verfahren zum Entpacken des derart hergestellten Bauteils (11) nach einem der vorangehenden Ansprüche,
wobei bei dem generativen Fertigungsverfahren in dem Bauraum (5) sämtliche Bauteile (11) in der Draufsicht nebeneinander, z.B. in einer einzigen horizontalen Bauteil-Lage, hergestellt werden und/oder
wobei das Bauteil (11) bzw. eines oder mehrere oder alle der Bauteile (11) eine jeweilige Stütz- oder Haltestruktur aufweisen, die bei dem generativen Fertigungsverfahren zusammen mit dem jeweiligen Bauteil (11) mitausgebildet wird, wodurch beim Entpacken der Bauteile (11), wenn das fluidisierte nicht-verfestigte Partikelmaterial nach unten hin aus dem Bauraum (5) abgelassen wird, eine Beschädigung des jeweiligen Bauteils (11) und/oder ein Zulegen einer oder mehrerer Partikelmaterial-Abfluss-Durchgangsöffnungen (13) durch das Bauteil verhindert wird,
wobe optional bei dem generativen Fertigungsverfahren ferner ein oder mehrere Halterahmen mitausgebildet werden, an denen jeweils ein oder mehrere Bauteile über ihre jeweilige Stütz- oder Haltestruktur gehalten sind, und/oder
wobei optional mehrere Bauteile (11) über ihre jeweilige Stütz- oder Haltestruktur miteinander verbunden sind und/oder
wobei optional das Bauteil (11) bzw. eines oder mehrere oder alle der Bauteile (11) über ihre jeweilige Stütz- oder Haltestruktur mit der Bauplattform (7) verbunden sind und/oder sich an dieser abstützen.

10. Vorrichtung zur Verwendung in dem Verfahren nach einem der Ansprüche 1 bis 9, aufweisend:
eine Baubox (1) mit
einer vertikalen Umfangswandung (3), von der ein in dem Innenraum der Baubox (1) angeordneter Bauraum (5) umfangsseitig begrenzt ist,
einer Bauplattform (7), welche den Bauraum (5) nach unten hin begrenzt,
wobei in der Bauplattform (7) ein oder mehrere Partikelmaterial-Abfluss-Durchgangsöffnungen (13) zum Ablassen von fluidisiertem nicht-verfestigtem Partikelmaterial aus der Baubox (1) heraus ausgebildet sind, und
einem Schließmechanismus, der ausgebildet ist, um die ein oder mehreren Partikelmaterial-Abfluss-Durchgangsöffnungen (13) wahlweise zu verschließen und zu öffnen,
eine Fließbett-Erzeugungsvorrichtung, die angepasst ist, um die das Bauteil (11) umgebende Partikelmaterial-Schüttung (9) in ein Fließbett zu überführen, so dass das lose, nicht-verfestigte Partikelmaterial fluidisiert wird und das fluidisierte nicht-verfestigte Partikelmaterial nach unten hin aus dem Bauraum (5) heraus abgelassen werden kann, wobei die Fließbett-Erzeugungsvorrichtung eine Fluid-Einleitvorrichtung aufweist, die angepasst ist, um zur Erzeugung des Fließbetts ein Fluid derart durch die Bauplattform hindurch von unten in die Partikelmaterial-Schüttung (9) hinein einzuleiten, dass die Partikelmaterial-Schüttung (9) von dem eingeleiteten Fluid von unten nach oben durchströmt wird und das lose, nicht-verfestigte Partikelmaterial mittels des eingeleiteten Fluids aufgelockert und unter Ausbildung einer Wirbelschicht fluidisiert wird, sowie
eine Steuervorrichtung, welche derart eingerichtet ist, dass sie zum Entpacken des Bauteils (11) die Fließbett-Erzeugungsvorrichtung derart steuert, dass diese die das Bauteil (11) umgebende Partikelmaterial-Schüttung (9) in ein Fließbett überführt, so dass das lose, nicht-verfestigte Partikelmaterial fluidisiert wird und das fluidisierte nicht-verfestigte Partikelmaterial nach unten hin aus dem Bauraum (5) heraus abgelassen werden kann.

11. Vorrichtung nach Anspruch 10, wobei die Steuervorrichtung ferner derart eingerichtet ist, dass sie zum Entpacken des Bauteils (11) den Schließmechanismus derart steuert, dass dieser die ein oder mehreren Partikelmaterial-Abfluss-Durchgangsöffnungen (13) öffnet, so dass das fluidisierte nicht-verfestigte Partikelmaterial nach unten hin aus dem Bauraum (5) heraus abfließen kann.

12. Vorrichtung nach Anspruch 10 oder 11, wobei die ein oder mehreren Partikelmaterial-Abfluss-Durchgangsöffnungen (13) Saugvorrichtungs-frei ausgebildet sind, so dass das fluidisierte nicht-verfestigte Partikelmaterial nach dem Öffnen der Partikelmaterial-Abfluss-Durchgangsöffnungen (13) saugfrei durch die Partikelmaterial-Abfluss-Durchgangsöffnungen (13) hindurch aus der Baubox (5) abfließt, z.B. in einen unterhalb des Bauraums (5) angeordneten Auffangbehälter (19) frei hinein rieselt, in dem das von dem Bauteil (11) abgetrennte nicht-verfestigte Partikelmaterial gesammelt wird, und/oder
wobei die Innenseite (3a) der vertikalen Umfangswandung (3) frei von Partikelmaterial-Abfluss-Durchgangsöffnungen (13) ausgebildet ist, so dass das fluidisierte nicht-verfestigte Partikelmaterial zum Entpacken des Bauteils (11) ausschließlich nach unten hin aus dem Bauraum (5) ablassbar ist, z.B. in einen unterhalb des Bauraums (5) angeordneten Auffangbehälter (19) hinein, in dem das von dem Bauteil (11) abgetrennte nicht-verfestigte Partikelmaterial gesammelt wird.

13. Vorrichtung nach einem der Ansprüche 10 bis 12, wobei der Schließmechanismus wie in einem der Ansprüche 2 bis 4 beschrieben ausgebildet ist.

14. Vorrichtung nach einem der Ansprüche 10 bis 13,
wobei die Bauplattform (7) eine Mehrzahl von Fluid-Einlassöffnungen aufweist, durch die das Fluid von der Bauplattförm aus in die Partikelmaterial-Schüttung (9) einleitbar ist und/oder
wobei die Fluid-Einleitvorrichtung eine Mehrzahl von Fluid-Einleitdüsen (15) aufweist, welche in die Bauplattform (7) integriert sind und angepasst sind, um das Fluid in die Partikelmaterial-Schüttung (9) hinein einzuleiten, und/oder
wobei die Bauplattform (7) unter teilweiser Ausbildung der Fluid-Einleitvorrichtung zumindest abschnittsweise porös ausgebildet ist, so dass Fluid durch die Poren der Bauplattform (7) hindurch in die Partikelmaterial-Schüttung (9) hinein eingeleitet werden kann.

15. Vorrichtung nach einem der Ansprüche 10 bis 14, wobei die Steuervorrichtung.f.er.ner eingerichtet ist, um die Fluid-Einleitvorrichtung derart zu steuern, dass diese das Fluid stoßartig unter Erzeugung mehrerer zeitlich aufeinanderfolgender Fluidstöße von unten in die Partikelmaterial-Schüttung (9) hinein einleitet, z.B. gepulst oder getaktet, um das Fluid aufzulockern und unter Ausbildung der Wirbelschicht zu fluidisieren, und/oder
wobei der Schließmechanismus derart ausgebildet ist, dass die Fluid-Einleitdüsen (15) und/oder zumindest ein überwiegender Teil der Poren sowohl bei geöffneten als auch bei geschlossenen Partikelmaterial-Abfluss-Durchgangsöffnungen (13) freigegeben sind.

## Claims

1. A method for unpacking a component (11) produced by means of an additive manufacturing method from a particulate material fill (9) of loose, unconsolidated particulate material, which fill is arranged in a construction space (5) together with the component (11) and surrounds the component (11), wherein the construction space (5) is delimited downward by a construction platform (7) on which the particulate material fill (9) containing the component (11) is arranged,
wherein, for unpacking the component (11), the particulate material fill (9) surrounding the component (11) is transferred into a fluidized bed, so that the loose, unconsolidated particulate material is fluidized, and the fluidized, unconsolidated particulate material is drained downward through the construction platform (7) off the construction space (5),
wherein for generating the fluidized bed, a fluid is introduced through the construction platform (7), into the particulate material fill (9) from below in such a way that the particulate material fill (9) is flown-through by the fluid bottom-up, and that the loose, unconsolidated particulate material is loosened up by means of the fluid and is fluidized, thereby forming a fluidized bed, and
wherein one or more particulate material drain through-holes (13) are formed in the construction platform (7), which can be selectively closed and opened by means of a closing mechanism (17, 17', 17"), and wherein the one or more particulate material drain through-holes (13) are opened by means of the closing mechanism for draining the fluidized, unconsolidated particulate material, so that the fluidized, unconsolidated particulate material drains off downward through the one or more particulate material drain through-holes (13).

2. The method of claim 1, wherein the closing mechanism comprises a perforated sheet or a perforated plate (17) which is arranged substantially parallel to the construction platform (7), comprises one or more through-holes (17a) and is moveable relative to the construction platform (7) between a closing position and an opening position, for example horizontally and/or vertically movable, wherein the perforated sheet or the perforated plate (17) is moved relative to the construction platform (7) into the opening position, so as to let the fluidized, unconsolidated particulate material drain off downward through the one or more particulate material drain through-holes (13).

3. The method of claim 1, wherein the closing mechanism comprises one or more rotary disks (17') which are arranged rotatably on the lower side (7b) of the construction platform (7), which are each rotatably movable between a first rotational position and a second rotational position and which each comprise a plurality of through-holes (17a'), which are aligned with a plurality of associated particulate material drain through-holes (13) in the first rotational position and which are covered by the construction platform (7) in the second rotational position, so that the associated particulate material drain through-holes (13) are closed, wherein the one or more rotary disks (17') are rotated from the second rotational position into the first rotational position, so as to open the particulate material drain through-holes (13) and let the fluidized, unconsolidated particulate material drain off downward through the particulate material drain through-holes (13) and the through-holes (17a').

4. The method of claim 1, wherein the closing mechanism comprises a number of closures corresponding to the number of particulate material drain through-holes (13), for example in the form of plugs (17"), which are configured to selectively close and release a respectively associated particulate material drain through-hole (13), and which, relative to the construction platform (7), are vertically and/or horizontally movable between a closing position, in which the respective closure closes the associated particulate material drain through-hole (13), and an opening position, in which the respective closure releases the associated particulate material drain through-hole (13), wherein the closures are moved relative to the construction platform (7) from the closing position into the opening position, so as to let the fluidized, unconsolidated particulate material drain off downward through the one or more particulate material drain through-holes (13).

5. The method of any of the preceding claims, wherein the fluidized, unconsolidated particulate material drains downward through the construction platform and the particulate Material drain holes (13), respectively, off the construction space (5) in a suction-free manner, for example into a collecting vessel (19) arranged underneath the construction space (5), in which the unconsolidated particulate material separated from the component (11) is collected, and/or
wherein, in order to unpack the component (11), the fluidized, unconsolidated particulate material is drained downward off the construction space (5) predominantly or exclusively through the construction platform and the particulate material drain through-holes (13), respectively, for example into a collecting vessel (19) arranged underneath the construction space (5), in which the unconsolidated particulate material separated from the component (11) is collected.

6. The method of any of the preceding claims, wherein the construction platform (7) comprises a plurality of fluid inlet openings through which the fluid is introduced from the construction platform into the particulate material fill (9), and/or
wherein the construction platform (7) comprises a plurality of fluid introducing nozzles (15), by means of which the fluid is introduced into the particulate material fill (9), and/or
wherein the construction platform (7) is configured to be porous at least in sections, and wherein the fluid is introduced through the pores of the construction platform (7) into the particulate material fill (9).

7. The method of any of the preceding claims, wherein the fluid is introduced into the particulate material fill (9) from below in an impulsive way, thereby generating several chronologically successive fluid impulses, for example in a pulsed or clocked way, so as to loosen and fluidize the fluid, thereby forming the fluidized bed.

8. The method of any of claims 6 to 7, wherein the fluid introducing nozzles (15) and/or at least a predominant part of the pores are released by the closing mechanism both if the particulate material drain through-holes (13) are opened and closed.

9. A method for producing one or more components (11) by means of an additive manufacturing method in combination with a method for unpacking the component (11) produced in such a way of any of the preceding claims,
wherein, in the additive manufacturing method, in a top view, all components (11) are produced in the construction space (5) side by side, for example in a single horizontal component layer, and/or
wherein the component (11) and one or more or all of the components (11), respectively, comprise a respective support or holding structure which is formed together with the respective component (11) in the additive manufacturing method, whereby, upon unpacking the components (11), when the fluidized, unconsolidated particulate material is drained downward off the construction space (5), a damaging of the respective component (11) and/or a covering of one or more particulate material drain through-holes (13) by the component is avoided,
wherein, optionally, in the additive manufacturing method, one or more holding frames are further formed, where respectively one or more components are held through their respective support or holding structure, and/or
wherein, optionally, several components (11) are connected to each other by their respective support or holding structure, and/or
wherein, optionally, the component (11) and one or more or all of the components (11), respectively, are connected to the construction platform (7) through their respective support or holding structure and/or are supported thereon.

10. A device for use in the method of any of claims 1 to 9, comprising:
a construction box (1), having
a vertical circumferential wall (3) by which a construction space (5) arranged in the interior space of the construction box (1) is delimited on a circumferential side,
a construction platform (7) delimiting the construction space (5) downward,
wherein in the construction platform (7) one or more particulate Material drain through-holes (13) are formed for draining fluidized, unconsolidated particulate material off the construction box (1), and
a closing mechanism configured to selectively close and open the one or more particulate material drain through-holes (13),
a fluidized bed generating device adapted to transfer the particulate material fill (9) surrounding the component (11) into a fluidized bed, so that the loose, unconsolidated particulate material is fluidized and the fluidized, unconsolidated particulate material can be drained downward off the construction space (5), wherein the fluidized bed generating device comprises a fluid introducing device adapted to introduce a fluid through the construction platform, into the particulate material fill (9) from below for generating the fluidized bed in such a manner that the particulate material fill is flown-through by the introduced fluid bottom-up, and that loose, unconsolidated particulate material is loosened by means of the introduced fluid and is fluidized, thereby forming a fluidized bed, and
a control device configured so as to control the fluidized bed generating device for unpacking the component (11) in such a way that it transfers the particulate Material fill (9) surrounding the component (11) into a fluidized bed, so that the loose, unconsolidated particulate material is fluidized and the fluidized, unconsolidated particulate material can be drained downward off the construction space (5).

11. The device of claim 10, wherein the control device is further configured so as to control the closing mechanism for unpacking the component (11) in such a way that the latter opens the one or more particulate material drain through-holes (13), so that the fluidized, unconsolidated particulate material can drain downward off the construction space (5).

12. The device of claim 10 or 11, wherein the one or more particulate material drain through-holes (13) are formed to be suction device-free, so that, after opening the particulate material drain through-holes (13), the fluidized, unconsolidated particulate material drains off the construction box (5) in a suction-free way through the particulate material drain through-holes (13), for example freely trickles into a collecting vessel (19) arranged underneath the construction space (5), in which the unconsolidated particulate material separated from the component (11) is collected, and/or
wherein the inner side (3a) of the vertical circumferential wall (3) is configured free from particulate material drain through-holes (13), so that, for unpacking the component (11), the fluidized, unconsolidated particulate material is dischargeable from the construction space (5) exclusively downward, for example into a collecting vessel (19) arranged underneath the construction space (5), in which the unconsolidated particulate material separated from the component (11) is collected.

13. The device of any of claims 10 to 12, wherein the closing mechanism is configured as described in any of claims 2 to 4.

14. The device of any of claims 10 to 13,
wherein the construction platform (7) comprises a plurality of fluid inlet openings through which the fluid is introduceable from the construction platform into the particulate material fill (9), and/or
wherein the fluid introducing device comprises a plurality of fluid introducing nozzles (15) which are integrated into the construction platform (7) and adapted to introduce the fluid into the particulate material fill (9), and/or
wherein the construction platform (7) is formed to be porous at least in sections, thereby partially forming the fluid introducing device, so that fluid can be introduced into the particulate material fill (9) through pores of the construction platform (7).

15. The device of any of claims 10 to 14, wherein the control device is further configured to control the fluid introducing device in such a way that the latter introduces the fluid in an impulsive way from below into the particulate material fill (9), thereby generating several chronologically successive fluid impulses, for example in a pulsed or clocked way, so as to loosen up and fluidize the fluid, thereby generating the fluidized bed, and/or
wherein the closing mechanism is formed in such a way that the fluid introducing nozzles (15) and/or at least a predominant part of the pores are released both if the particulate material drain through-holes (13) are opened and closed.

## Revendications

1. Procédé pour extraire une pièce (11) fabriquée par un procédé de fabrication additive à partir d'un matériau particulaire en vrac (9) constitué d'un matériau particulaire meuble et non compacté, qui est disposé en même temps que la pièce (11) dans un espace de construction (5) et entoure la pièce (11), l'espace de construction (5) étant vers le bas limité par une plateforme de construction (7) sur laquelle est disposé le matériau particulaire en vrac (9) contenant la pièce (11),
dans lequel, pour l'extraction de la pièce (11), le matériau particulaire en vrac (9) entourant la pièce (11) est converti en un lit fluidisé de sorte que le matériau particulaire meuble et non compacté se présente sous forme fluidisée, et que le matériau particulaire fluidisé non compacté soit évacué vers le bas à partir de l'espace de construction (5) en traversant la plateforme de construction (7),
dans lequel, pour la production du lit fluidisé, un fluide est envoyé dans le matériau particulaire en vrac (9) par le bas, en traversant la plateforme de construction (7), de telle sorte que le matériau particulaire en vrac (9) soit traversé par le fluide de bas en haut, et que le matériau particulaire meuble et non compacté soit ameubli à l'aide du fluide et soit fluidisé avec formation d'un lit fluidisé, et
dans lequel, dans la plateforme de construction (7), un ou plusieurs orifices de passage (13) pour le déversement du matériau particulaire sont formés, qui à l'aide d'un mécanisme de fermeture (17, 17', 17") peuvent au choix être fermés ou ouverts, et dans lequel le ou les orifice(s) de passage (13) pour le déversement du matériau particulaire sont ouverts à l'aide du mécanisme de fermeture pour déverser le matériau particulaire fluidisé non compacté, de telle sorte que le matériau particulaire fluidisé non compacté se déverse vers le bas en passant par le ou les orifice(s) de passage (13) pour le déversement du matériau particulaire.

2. Procédé selon la revendication 1, dans lequel le mécanisme de fermeture comprend une tôle perforée ou une plaque perforée (17), qui pour l'essentiel est disposée parallèlement à la plateforme de construction (7), comprend un ou plusieurs trous de passage (17a) et peut se déplacer dans un sens et dans l'autre par rapport à la plateforme de construction (7) entre une position de fermeture et une position d'ouverture, en pouvant par exemple subir une translation horizontale et/ou verticale, la tôle perforée ou la plaque perforée (17) se déplaçant, par rapport à la plateforme de construction (7), pour arriver à la position de fermeture, dans le but de permettre au matériau particulaire fluidisé non compacté de se déverser vers le bas en passant par le ou les orifice(s) de passage (13) pour le déversement du matériau particulaire.

3. Procédé selon la revendication 1, dans lequel le mécanisme de fermeture comprend un ou plusieurs plateaux tournants (17'), qui sont disposés de façon à pouvoir tourner sur la face inférieure (7b) de la plateforme de construction (7), dont chacun peut se déplacer en rotation dans un sens et dans l'autre entre une première position de rotation et une deuxième position de rotation, et dont chacun comprend une pluralité de trous de passage (17a'), qui dans la première position de rotation sont en alignement avec une pluralité d'orifices de passage (13) pour le déversement du matériau particulaire qui leur sont affectés, et qui, dans la deuxième position de rotation, sont recouverts par la plateforme de construction (7), de telle sorte que les orifices de passage (13) pour le déversement du matériau particulaire soient obturés, le ou les plateaux tournants (17') étant mis en rotation de la deuxième position de rotation à la première position de rotation, pour ouvrir les orifices de passage (13) pour le déversement du matériau particulaire et permettre le déversement vers le bas du matériau particulaire fluidisé non compacté, en lui faisant traverser les orifices de passage pour le déversement du matériau particulaire, ainsi que les trous de passage (17a').

4. Procédé selon la revendication 1, dans lequel le mécanisme de fermeture comprend un nombre d'obturateurs, par exemple sous forme de bouchons (17"), correspondant au nombre des orifices de passage (13) pour le déversement du matériau particulaire, qui sont constitués de façon à obturer et dégager sélectivement chacun des orifices de passage (13) pour le déversement du matériau particulaire qui leur sont affectés, et qui peuvent se déplacer dans un sens ou dans l'autre, verticalement et/ou horizontalement, par rapport à la plateforme de construction (7), entre une position de fermeture dans laquelle chaque obturateur obture l'orifice de passage (13) pour le déversement du matériau particulaire qui lui est affecté, et une position d'ouverture, dans laquelle chaque obturateur dégage l'orifice de passage (13) pour le déversement du matériau particulaire qui lui est affecté, les obturateurs se déplaçant par rapport à la plateforme de construction (7) de la position de fermeture à la position d'ouverture, pour permettre le déversement vers le bas du matériau particulaire fluidisé non compacté en lui faisant traverser le ou les orifices de passage (13) pour le déversement du matériau particulaire.

5. Procédé selon l'une des revendications précédentes, dans lequel le matériau particulaire fluidisé non compacté est déversé sans aspiration vers le bas, à partir de l'espace de construction (5), en traversant la plateforme de construction ou les orifices de passage (13) pour le déversement du matériau particulaire, pour arriver par exemple dans un bac collecteur (19) disposé en-dessous de l'espace de construction (5), bac dans lequel s'accumule le matériau particulaire non compacté séparé de la pièce (11), et/ou
dans lequel le matériau particulaire fluidisé non compacté est, pour permettre l'extraction de la pièce (11), évacué vers le bas à partir de l'espace de construction (5), essentiellement ou exclusivement par passage à travers la plateforme de construction ou les orifices de passage (13) pour le déversement du matériau particulaire, par exemple dans un bac collecteur (19) disposé en-dessous de l'espace de construction (5), bac dans lequel s'accumule le matériau particulaire non consolidé séparé de la pièce (11).

6. Procédé selon l'une des revendications précédentes, dans lequel la plateforme de construction (7) comprend une pluralité d'orifices d'entrée de fluide, à travers lesquels le fluide est introduit, en provenant de la plateforme de construction, dans le matériau particulaire en vrac (9), et/ou
dans lequel la plateforme de construction (7) comprend une pluralité de buses d'introduction de fluide (15), à l'aide desquels le fluide est introduit dans le matériau particulaire en vrac (9), et/ou
dans lequel la plateforme de construction (7) est au moins par segments réalisé d'une manière poreuse, et le fluide est introduit dans le matériau particulaire en vrac (9) en passant par les pores de la plateforme de construction (7).

7. Procédé selon l'une des revendications précédentes, dans lequel le fluide est introduit par le bas dans le matériau particulaire en vrac (9) par saccades avec production de plusieurs saccades de fluide successives dans le temps, par exemple par impulsions ou en cadence, pour désagréger le fluide et le fluidiser avec formation du lit fluidisé.

8. Procédé selon l'une des revendications 6 à 7, dans lequel les buses d'introduction de fluide (15) et/ou au moins une partie principale des pores sont dégagés par le mécanisme de fermeture, tant dans la position ouverte que dans la position fermée des orifices de passage (13) pour le déversement du matériau particulaire.

9. Procédé de fabrication d'une ou plusieurs pièces (11) à l'aide d'un procédé de fabrication additive en combinaison avec un procédé pour l'extraction de la pièce (11) fabriquée de cette manière selon l'une des revendications précédentes,
dans lequel, dans le procédé de fabrication additive, la totalité des pièces (11) sont, dans l'espace de construction (5) fabriquées en vue de dessus les unes à côté des autres, c'est-à-dire selon une position horizontale unique des pièces, et/ou
dans lequel la pièce (11), ou une ou plusieurs ou la totalité des pièces (11) comprennent chacune une structure de soutènement ou de maintien, qui dans le procédé de fabrication additive est réalisée en même temps que la pièce considérée (11), ce qui va, lors de l'extraction des pièces (11), quand le matériau particulaire fluidisé non compacté est déversé vers le bas à partir de l'espace de construction (5), empêcher une dégradation de la pièce (11) considérée et/ou un élargissement d'un ou plusieurs orifices de passage (13) pour le déversement du matériau particulaire,
dans lequel, en option, dans le procédé de fabrication additive, il y a en outre constitution simultanée d'un ou plusieurs cadres de maintien, contre chacun desquels une ou plusieurs pièces sont maintenues grâce à leur structure de soutènement ou de maintien correspondante, et/ou
dans lequel, en option, plusieurs pièces (11) sont reliées les unes aux autres par l'intermédiaire de la structure de soutènement ou de maintien correspondant à chacune d'elles, et/ou
dans lequel, en option, la pièce (11) ou une ou plusieurs ou la totalité des pièces (11) sont reliées à la plateforme de construction (7) par l'intermédiaire de la structure de soutènement ou de maintien correspondant à chacune d'elles, et/ou s'appuient contre elle.

10. Dispositif pour une utilisation dans le procédé selon l'une des revendications 1 à 9, comprenant :
- une enceinte de construction (1), comportant :
- une paroi périphérique verticale (3), qui délimite la périphérie d'un espace de construction (5) disposé dans l'espace intérieur de l'enceinte de construction (1),
- une plateforme de construction (7), qui délimite l'espace de construction (5) vers le bas,
dans lequel, dans la plateforme de construction (7), un ou plusieurs orifices de passage (13) pour le déversement du matériau particulaire sont réalisés pour permettre le déversement, à partir de l'enceinte de construction (1), d'un matériau particulaire fluidisé non compacté, et
- un mécanisme de fermeture, qui est conçu pour, au choix, fermer ou ouvrir le ou les orifices de passage (13) pour le déversement du matériau particulaire,
- un dispositif de production d'un lit fluidisé, qui est conçu pour convertir en un lit fluidisé le matériau particulaire en vrac (9) qui entoure la pièce (11), de telle sorte que le matériau particulaire meuble et non compacté soit fluidisé et que le matériau particulaire fluidisé non compacté puisse être déversé vers le bas à partir de l'espace de construction (5), le dispositif de production d'un lit fluidisé comprenant un dispositif d'introduction de fluide, qui est conçu pour, dans le but de produire le lit fluidisé, introduire un fluide par en bas dans le matériau particulaire en vrac (9), en passant par la plateforme de construction, de telle sorte que le matériau particulaire en vrac (9) soit traversé de bas en haut par le fluide introduit, et que le matériau particulaire meuble et non compacté soit a à l'aide du fluide introduit et soit fluidisé avec formation d'un lit fluidisé, ainsi que
- un dispositif de commande, qui est conçu de façon, pour l'extraction de la pièce (11), à commander le dispositif de production d'un lit fluidisé de telle sorte que ce dernier convertisse en un lit fluidisé le matériau particulaire en vrac (9) qui entoure la pièce (11), de telle sorte que le matériau particulaire meuble et non compacté soit fluidisé et que le matériau particulaire fluidisé non compacté puisse être déversé vers le bas à partir de l'espace de construction (5).

11. Dispositif selon la revendication 10, dans lequel le dispositif de commande est en outre conçu de façon, lors de l'extraction de la pièce (11), à commander le mécanisme de fermeture de telle sorte que ce dernier ouvre le ou les orifice(s) de passage (13) pour le déversement du matériau particulaire, de telle sorte que le matériau particulaire fluidisé non compacté puisse être déversé vers le bas à partir de l'espace de construction (5).

12. Dispositif selon la revendication 10 ou 11, dans lequel le ou les orifices de passage (13) pour le déversement du matériau particulaire sont conçus sans dispositif d'aspiration, de telle sorte que le matériau particulaire fluidisé et non compacté soit, après l'ouverture des orifices de passage (13) pour le déversement du matériau particulaire, déversé sans aspiration de l'enceinte de construction (5) en passant par les orifices de passage (13) pour le déversement du matériau particulaire, par exemple en s'écoulant en écoulement libre dans un bac collecteur (19) disposé en-dessous de l'espace de construction (5), bac dans lequel s'accumule le matériau particulaire non compacté, séparé de la pièce (11), et/ou
la face intérieure (3a) de la paroi périphérique verticale (3) étant conçue sans orifices de passage (13) pour le déversement du matériau particulaire, de telle sorte que le matériau particulaire fluidisé non compacté puisse, pour l'extraction de la pièce (11), être évacué exclusivement vers le bas à partir de l'espace de construction (5), par exemple pour pénétrer dans un bac collecteur (19) disposé en-dessous de l'espace de construction (5), bac dans lequel s'accumule le matériau particulaire non compacté séparé de la pièce (11).

13. Dispositif selon l'une des revendications 10 à 12, dans lequel le mécanisme de fermeture est conçu comme décrit dans l'une des revendications 2 à 4.

14. Dispositif selon l'une des revendications 10 à 13,
dans lequel la plateforme de construction (7) comprend une pluralité d'orifices d'entrée de fluide, par lesquels le fluide peut, en provenance de la plateforme de construction, être introduit dans le matériau particulaire en vrac (9), et/ou
dans lequel le dispositif d'introduction de fluide comprend une pluralité de buses d'introduction de fluide (15), qui sont intégrées dans la plateforme de construction (7) et sont conçues de façon à introduire le fluide dans le matériau particulaire en vrac (9), et/ou
dans lequel la plateforme de construction (7) est, avec formation partielle du dispositif d'introduction de fluide, réalisée d'une manière poreuse au moins par segments, de telle sorte que le fluide puisse être introduit dans le matériau particulaire en vrac (9) en passant par les pores de la plateforme de construction (7).

15. Dispositif selon l'une des revendications 10 à 14, dans lequel le dispositif de commande est en outre conçu pour commander le dispositif d'introduction de fluide de telle sorte que ce dernier introduise le fluide par en bas dans le matériau particulaire en vrac (9), par saccades avec production de plusieurs saccades de fluide successives dans le temps, par exemple par impulsions ou en cadence, pour désagréger le fluide et le fluidiser avec formation du lit fluidisé, et/ou
dans lequel le mécanisme de fermeture est conçu de telle sorte que les buses d'introduction de fluide (15) et/ou au moins une partie principale des pores soient dégagés tant dans la position d'ouverture que dans la position de fermeture des orifices de passage (13) pour le déversement du matériau particulaire.
